# FASCICULE DE BREVET EUROPEEN

(11) **EP 0 487 691 B1**
(45) Date de publication et mention de la délivrance du brevet: **26.07.1995**
(21) Numéro de dépôt: 91911854.7
(22) Date de dépôt: 18.06.1991
(51) Int. Cl.: F16L 11/04

(54) **CONDUITE TUBULAIRE FLEXIBLE COMPORTANT UNE GAINE EN POLYETHYLENE RETICULE, DISPOSITIF ET PROCEDE POUR LA FABRICATION D'UNE TELLE CONDUITE**
ROHRFÖRMIGE FLEXIBLE LEITUNG MIT EINEM AUS VERNETZTEM POLYÄTHYLEN BESTEHENDEN GERÜST SOWIE VORRICHTUNG UND VERFAHREN ZUR HERSTELLUNG DERSELBEN
FLEXIBLE TUBULAR DUCT COMPRISING A CROSS-LINKED POLYETHYLENE SLEEVE, AND DEVICE AND METHOD FOR MANUFACTURING SAME

(30) Priorité: 18.06.1990 FR 9007576
(43) Date de publication de la demande: 03.06.1992
(73) Titulaire: COFLEXIP, 92100 Boulogne-Billancourt (FR)
(72) Inventeur: HARDY, Jean, F-76360 Barentin (FR); MORAND, Michel, F-76480 Duclair (FR)
(74) Mandataire: Leszczynski, André
(86) Numéro de dépôt international: FR9100487
(87) Numéro de publication internationale: WO9119924

(56) Documents cités:
- EP-A- 0 087 344
- EP-A- 0 147 288
- AT-B- 286 036
- FR-A- 2 225 681
- FR-A- 2 596 696
- FR-A- 2 611 582
- GB-A- 2 059 538
- Applied Organometallic Chemistry (1988), p. 17-31, G.M. Gale, "Silane compounds in hot water pipe and cable technology"

## Description

La présente invention se rapporte à des conduites tubulaires flexibles comportant au moins une gaine en polyoléfine réticulée, notamment en polyéthylène réticulé, et un procédé de fabrication de telles conduites tubulaires flexibles.

Il est connu de réaliser des conduites tubulaires flexibles comportant au moins une gaine d'étanchéité en matériau plastique et des nappes d'armures assurant la résistance à la pression et à la traction. En particulier, la société déposante a développé et commercialisé des conduites tubulaires flexibles à hautes performances destinées à la production de pétrole sur des gisements sous-marins, et dont il a été donné une description à la conférence "Improved Thermoplastic Materials Thermoplastic Materials for Offshore Flexible Pipes" par F.A. DAWANS, J. JARRIN, to LEFEVRE et M. PELISSON lors de la 18ème session de l'OTC à HOUSTON (OTC 5231), ainsi que dans EP-A-147288.

On connait également sous le nom d'ombilicaux des canalisations constituées par l'assemblage d'une pluralité de flexibles du genre flexibles hydrauliques, et qui sont utilisés dans les mêmes installations de productions pétrolières en mer comme moyens de liaison avec des équipements éloignés pour assurer des fonctions de télécommande hydraulique ou électro-hydraulique, ou autres fonctions diverses.

On utilise pour les gaines d'étanchéité divers matériaux plastiques.

Les polyoléfines, principalement le polyéthylène, et en particulier le polyéthylène haute densité (HDPE) subissent des attaques physico-chimiques de la part du pétrole brut contenant du gaz (live crude).

Les polyamides 11 et 12 résistent très bien au pétrole brut et sont en général satisfaisants, mais ils sont d'un coût élevé. De plus, ces polyamides peuvent subir une hydrolyse en présence d'eau. Or, les pétroles bruts contiennent souvent de l'eau. Cette hydrolyse n'a pas en général de conséquence inacceptable sur le fonctionnement des conduites tubulaires flexibles statiques. Par contre, pour des conduites tubulaires flexibles comportant une gaine en polyamide 11 ou 12 subissant des déformations alternées, comme c'est par exemple le cas pour des conduites tubulaires flexibles suspendues en chaînettes entre deux supports mobiles (jumpers) ou des conduites tubulaires flexibles destinées à la remontée du fond à la surface de pétrole brut (risers), on peut assister à une dégradation du matériau plastique résultant en des pertes d'étanchéité si le pétrole brut comporte de l'eau et se trouve à une température relativement élevée. Ces pertes d'étanchéité proviennent de la propagation de fissures dans le polyamide partiellement hydrolysé. Dans un tel cas, même une augmentation d'épaisseur, qui se solderait pas une augmentation du coût de revient de la conduite tubulaire flexible, n'arrive pas à garantir l'étanchéité sur une longue période d'utilisation comme par exemple une période comprise entre 5 et 20 ans. La relation entre la vitesse de dégradation et la température atteinte par le matériau plastique s'exprime par une formule du type loi d'Arrhenius. En outre, les polyamides sont d'une perméabilité relativement très élevée vis-à-vis du méthanol, qui est couramment utilisé dans les installations de productions pétrolières sous-marines, et d'autres fluides de la famille des alcools; il a ainsi été trouvé que ce phénomène est la cause des fuites importantes qui ont été observées sur des ombilicaux de grande longueur. Ces constatations entraînent la nécessité de trouver un autre matériau en remplacement aux polyamides 11 ou 12 qui avaient été adoptés pour ces applications comme étant les meilleurs matériaux aptes à résister aux conditions particulières d'utilisation, en particulier la compatibilité avec le pétrole brut.

Ainsi, pour des conduites tubulaires flexibles destinées à véhiculer des hydrocarbures à haute température contenant de l'eau, ou un fluide de la famille des alcools, et en particulier soumis à des effets dynamiques, on est conduit à utiliser des plastiques comportant des fluorures de polyvinylidene (PVDF) sous forme d'homopolymère ou de copolymère. Toutefois, les plastiques fluorés sont d'un coût extrêmement élevé pouvant dépasser 20 fois le prix du volume correspondant du polyéthylène.

Il est d'autre part connu d'améliorer par réticulation certaines propriétés du polyéthylène. Trois méthodes de réticulation pouvant être employées, par irradiation, par silane, ou par voie chimique, notamment par peroxyde. En particulier, la méthode par silane avec réticulation par hydrolyse des groupements metoxy R-Si- [OCH₃]₃ a été notamment exposée par G.M. GALE dans Applied Organometallic Chemistry de 1988 ("Silane compounds in hot-water pipe and cable technology" p. 17 à 31).

Il est par ailleurs connu par EP-A-087344 d'améliorer le comportement mécanique des polyéthylènes, pour tubes de grands diamètres, par une réticulation chimique utilisant des peroxydes. La méthode chimique de réticulation nécessite des grandes quantités de chaleur. Elle n'a jamais pu être mise en oeuvre industriellement pour réaliser des tubes en polyéthylène pour structures flexibles hautes performances dans la mesure où l'augmentation des températures nécessaire à l'obtention de la réticulation ne permet pas aux tubes de supporter leur propre poids.

La présente invention permet de remédier aux inconvénients de conduites tubulaires flexibles de types connus. Les caractéristiques des conduites tubulaires flexibles selon l'invention font l'objet des revendications 1 et 2.

Suite aux travaux de recherche effectués par la société demanderesse, il a été trouvé, d'une façon surprenante, qu'une gaine d'étanchéité réalisée selon l'invention conserve des propriétés mécaniques satisfaisantes lorsqu'elle est exposée pendant des durées importantes au pétrole brut contenant du gaz (live crude) sous une température relativement élevée dépassant 60°C, et pouvant atteindre au moins 90°C et éventuellement 100°C. La durée de service possible varie en fonction des particularités de chaque cas d'application, mais est toujours supérieure à 1 an, est normalement de plusieurs années, et peut atteindre par exemple 20 ans. Il a été montré dans EP-A-087344 cité ci-dessus qu'une telle propriété de résistance en milieu hydrocarboné peut être obtenue avec un polyéthylène haute ou moyenne densité réticulé chimiquement par peroxyde comprenant un agent plastifiant particulier. Il était par contre admis jusqu'à présent qu'un polyéthylène réticulé par silane ne peut pas être utilisé en milieu hydrocarboné; en particulier, l'utilisation de tubes en polyéthylène réticulé par silane n'était connue à ce jour que pour la réalisation d'installations de chauffage central à eau chaude avec des taux de réticulation supérieurs à 65% mais dont la valeur réelle mesurable sur le tube fabriqué ne dépasse pas, dans la pratique, 72%, bien que des valeurs théoriques, pouvant atteindre jusqu'à 80%, soient citées parfois.

Il a été ainsi établi que le comportement en présence de pétrole brut d'une gaine en polyoléfine réticulée est conditionné par son taux de réticulation. Il a en outre été trouvé que la valeur du taux de réticulation réellement atteinte en fin du processus de fabrication, lorsque l'opération de réticulation est terminée, joue un rôle déterminant sur ledit comportement, et ceci indépendamment de l'augmentation ultérieure du taux de réticulation qui peut se produire spontanément. En effet, la valeur du taux de réticulation atteinte en fin d'opération de réticulation étant, inévitablement, plus ou moins inférieure à la valeur maximale possible qui correspond à la notion de taux de réticulation (ou taux de gel) potentiel telle que cette notion est définie plus loin, il est possible que le taux de réticulation continue d'augmenter postérieurement à la fin de l'opération de réticulation, pendant le stockage ou en service, en fonction des conditions naturelles d'environnement ou des conditions d'utilisation. En particulier, il est préférable que la différence entre le taux de réticulation réel atteint en fin d'opération de réticulation et le taux de réticulation potentiel soit relativement faible. Il a en effet été trouvé, d'une part que, si cette différence est importante, l'évolution ultérieure du taux de réticulation en fonction des circonstances devient imprévisible, et, d'autre part, que les matériaux utilisés pour réaliser la gaine d'étanchéité doivent se trouver dans un état à peu près stabilisé pour qu'il soit possible d'en garantir la bonne tenue aux hydrocarbures.

Il a par exemple été trouvé qu'une réticulation dont la différence entre le taux de réticulation potentiel et le taux de réticulation réel atteint en fin du processus de réticulation était égal à 5 % (taux de réticulation potentiel 80 %, taux de réticulation réellement atteint 75 %) assure une excellente tenue aux hydrocarbures de la gaine réticulée. De même, les différences de 8 % et d'environ 10 % ont permis de constater une bonne tenue aux hydrocarbures. On pense que des différences de l'ordre de 10 % permettent de garantir la bonne tenue aux hydrocarbures désirée, tandis qu'une différence de 15 % risque d'entrainer une dégradation dans le temps de la tenue aux hydrocarbures de la gaine.

Selon l'invention des résultats intéressants ont été obtenus en choisissant les grades de polyéthylène de base ainsi que les teneurs en promoteur de radicaux libres et en agent de réticulation (silane), et/ou en réglant les conditions de l'opération de réticulation de façon à obtenir un taux de réticulation supérieur à 70% en fin d'opération de réticulation.

De préférence, ce taux de réticulation est égal ou supérieur à 75%.

Le comportement en présence de pétrole brut est particulièrement bon lorsque les matériaux mis en oeuvre par extrusion pour réaliser le tube ou la gaine d'étanchéité à réticuler sont des homopolymères ou des copolymères d'éthylène ou des mélanges des deux, présentant les densités spécifiées et ne comportant pas de polyéthylènes basse densité.

Il est proposé selon l'invention d'exclure les polyéthylènes dont la densité est inférieure à une valeur minimale. Cette exclusion s'applique aux composés mis en oeuvre, notamment au mélange greffé constitué par du polyéthylène greffé par silane, lors d'une opération préalable, aussi bien qu'au polyéthylène servant de base, qu'au composé, dit mélange maître, contenant le catalyseur éventuellement et qu'aux autres composés à base de polyéthylène non greffé et non associé à un catalyseur.

Bien que l'on n'ait pas trouvé d'explication théorique justifiant les résultats obtenus à ce sujet, il a en effet été trouvé que la compatibilité au pétrole brut est considérablement moins bonne si l'un des composés utilisés pour être transformé par extrusion est à base de polyéthylène basse densité (LDPE) ou des valeurs basses des polyéthylènes moyenne densité (MDPE), et ceci y compris dans le cas du mélange maître bien que ce dernier représente un pourcentage très limité de la quantité totale de polyéthylène mise en oeuvre. A titre de comparaison, on peut noter que les mélanges utilisés, selon les applications connues précédemment, pour réaliser des tubes plastiques pour eau chaude ou des gainages de câbles électriques, comprennent, pratiquement toujours, au moins un composé constitué par, ou à base de, polyéthylène basse densité, ou de valeurs basses des polyéthylènes moyenne densité. Selon l'invention, le polyéthylène greffé constituant le mélange greffé, ainsi que le ou les polyéthylènes utilisés pour réaliser le mélange maître et/ou les autres composés mis en oeuvre par extrusion présentent une densité supérieure ou égale à 0,931, et, de façon avantageuse, égale ou supérieure à 0,940, les meilleurs résultats étant obtenus avec une densité égale ou supérieure à 0,950.

Par ailleurs, les résultats d'essais sur prototypes ont montré que, par rapport aux gaines d'étanchéité interne réalisés avec les mêmes matériaux dans un état non réticulé, les gaines d'étanchéité interne de conduites tubulaires flexibles réalisées en polyoléfine, en particulier en polyéthylène, réticulées par hydrolyse présentent une résistance considérablement plus élevée aux effets de fissuration sous contrainte (stress cracking) non seulement en présence d'hydrocarbure (ces effets pouvant alors se développer en plus des effets de cloquage décrits plus loin) mais aussi en présence de fluides de la famille des alcools, tels que le méthanol, cette propriété étant très importante dans le cas, en particulier, des flexibles hydrauliques utilisés dans les installations de production pétrolière.

La mise en oeuvre et la réticulation de la polyoléfine, préférablement du polyéthylène, contenant du silane, peuvent être réalisées par exemple par le procédé "SIOPLAS", par le procédé "MONOSIL", ou par tout autre procédé faisant appel à une réaction d'hydrolyse. Par réaction d'hydrolyse, on entend ici, de façon en soi connue, une réaction d'hydrolyse de groupements de type 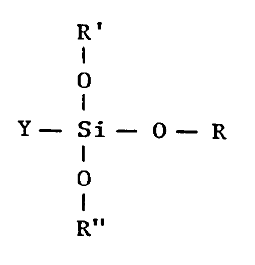
avec condensation de deux fonctions siloxanes portées par deux chaines oléfiniques différentes en présence d'un catalyseur et sous l'effet de la chaleur et permettant la formation de la liaison 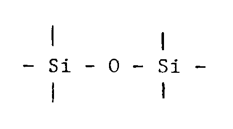
caractéristique de la réticulation, les fonctions siloxanes étant préalablement obtenues par substitution d'un radical OH à l'un au moins des trois radicaux O-R, O-R′, O-R˝, de la partie greffée de la polyoléfine, chacun des trois radicaux O-R, O-R′, O-R˝ étant, de façon courante, un radical méthoxy ou un radical ethoxy, ou encore un autre radical alkane contenant un oxygène lié au silicium, et le greffage de la polyoléfine ayant été réalisé lors d'une opération préalable par fixation d'une silane sur une polyoléfine qui présente des radicaux libres par suite de l'action d'un promoteur de radicaux libre, normalement un peroxyde.

La présente invention a également pour objet un procédé de fabrication de conduites tubulaires flexibles tel que défini dans la revendication 3. Des caractéristiques avantageuses de ce procédé sont exposées dans les revendications 4 à 13.

Dans un mode particulier de mise en oeuvre, une partie au moins du catalyseur qui favorise la réaction d'hydrolyse est mise en suspension ou dissoute dans l'eau ou le fluide contenant de l'eau qui est à l'intérieur de la conduite flexible à réticuler. Il est ainsi possible soit de combiner l'action du catalyseur contenu dans le fluide à l'intérieur de la conduite avec l'action du catalyseur introduit dans l'extrudeuse avec les résines polyoléfiniques (par les procédés SIOPLAS ou MONOSIL par exemple), soit de mettre en oeuvre la totalité du catalyseur utilisé par dissolution ou dispersion dans le fluide intérieur à la conduite. Il a été trouvé que l'on peut augmenter l'efficacité de l'opération de réticulation et, en particulier, obtenir des taux de réticulation relativement élevés sans avoir à augmenter la durée de l'opération lorsque la totalité du catalyseur utilisé est apportée par le fluide intérieur à la conduite.

La chaleur nécessaire pour que le processus de réticulation se développe de façon convenable peut être émise et transmise jusqu'à la gaine d'étanchéité à réticuler par n'importe quel moyen connu.

Un procédé particulièrement avantageux selon la présente invention permet d'utiliser la conduite tubulaire flexible elle-même pour véhiculer un fluide pour apporter la chaleur permettant d'assurer l'élévation et le maintien de la température nécessaire à l'obtention dans un temps raisonnable de la réaction désirée. Il est également possible d'utiliser comme résistances chauffantes des fils conducteurs électriques disposés à l'intérieur de la paroi de la conduite tubulaire flexible ; en particulier, on peut utiliser à cet effet tout ou partie des nappes de fils métalliques qui constituent l'armure de résistance du flexible. Un exemple d'un flexible chauffant de ce type étant décrit dans FR-A-2662229. Alternativement, un fluide conducteur de la chaleur étant à l'intérieur de la conduite flexible, on peut également utiliser une résistance électrique chauffante, telle qu'un câble étanche, disposée à l'intérieur de la conduite flexible sur au moins une partie de sa longueur.

Il a été découvert, suite aux travaux consacrés par la société déposante à l'étude des divers procédés de réticulation envisageables, que, dans le cas des conduites flexibles continues de grande longueur, telles que celles utilisées dans les installations de productions pétrolières sous-marines, et en particulier lorsque ces conduites flexibles comportent une paroi relativement épaisse composée de plusieurs couches de gaines plastiques ou élastomériques ainsi que de nappes d'armure lui conférant une résistance élevée, qu'il est particulièrement avantageux d'utiliser la conduite interne du flexible pour assurer la circulation sous pression du fluide qui apporte à la gaine d'étanchéité l'eau et/ou les calories permettant d'effectuer la réticulation dans de bonnes conditions.

Les conduites flexibles de haute résistance avec structure à plusieurs couches, particulièrement avantageuses, ont des diamètres variant de 25 mm à 500 mm, et des pressions intérieures admissibles pouvant varier en fonction du diamètre valant au minimum 20 bars et pouvant atteindre 1000 bars.

D'une façon générale, il est particulièrement important que la méthode utilisée pour réaliser l'opération de réticulation permette d'obtenir le taux de réticulation désiré dans une durée d'opération relativement courte, cette durée pouvant être, dans la pratique, de quelques jours, et pouvant atteindre de l'ordre d'une dizaine de jours. Indépendamment de l'intérêt de pouvoir réduire la durée de la fabrication, la méthode de réticulation selon l'invention, avec circulation interne d'eau ou de fluide contenant de l'eau à température élevée, est particulièrement avantageuse, en raison de son efficacité supérieure, du fait que la propriété de résistance au pétrole brut du polyéthylène réticulé par silane a été trouvée comme conditionnée, entre autres, par l'obtention d'un taux de réticulation suffisamment élevé, dès la fin de l'opération de réticulation et présentant une différence relativement faible par rapport au taux de réticulation potentiel. En outre, il a été trouvé que, si l'augmentation progressive du taux de réticulation se produit trop lentement pendant l'opération de réticulation, il en résulte qu'il devient très difficile, voire impossible, d'atteindre un taux de réticulation final suffisamment élevé ; cette difficulté semble pouvoir s'expliquer par le fait qu'un processus de réticulation trop lent permet la formation de liaisons de types divers entre les chaines oléfiniques, ces liaisons pouvant d'une part, être comme inaptes à favoriser la résistance au pétrole brut d'une polyoléfine réticulée par silane, et prenant, d'autre part, la place des liaisons cherchées du type :

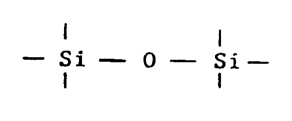

Pour que l'opération de réticulation soit réalisée de façon correcte et dans un délai raisonnable, il est essentiel que, pendant toute la durée de l'opération de réticulation, la température de la gaine d'étanchéité concernée soit, dans toute la longueur de la conduite flexible, maintenue entre deux limites déterminées. D'une part la température doit rester inférieure à une certaine limite supérieure qui est déterminée en fonction du matériau utilisé de façon à conserver les propriétés mécaniques au niveau désiré, et qui ne doit pas dépasser pour du polyéthylène une température d'environ 120°C correspondant au seuil de fusion des petites cristallites. D'autre part, la température doit rester supérieure à une certaine limite inférieure qui est fixée en fonction de l'énergie nécessaire à l'obtention d'une cinétique de réticulation compatible avec une durée d'opération acceptable, par exemple inférieure à une semaine. La température minimum étant d'au moins 85°C et de préférence 90°C pour du polyéthylène.

De façon à réaliser la réticulation dans un délai raisonnable et assurer la qualité finale du produit obtenu, les études réalisées par la société demanderesse ont montré qu'il est très important de vérifier que les limitations de température définies ci-dessus sont bien observées dans l'opération de réticulation; cette vérification permet en effet, en combinaison avec le contrôle des autres facteurs intervenant dans l'opération, et en s'appuyant sur la référence à des essais préliminaires de réglage du processus, de s'assurer que le matériau réticulé possède exactement la qualité voulue. Une telle méthode de vérification est particulièrement intéressante dans le cas où l'on procède, ainsi qu'il est décrit ci-après, à la réticulation d'une gaine recouverte par des couches d'armure et par une ou plusieurs autres gaines, ce qui rend difficile ou impossible l'inspection de la bonne réticulation de la gaine d'étanchéité; elle s'applique donc avantageusement à la fabrication des conduites tubulaires flexibles de haute résistance destinées à l'exploitation de champs pétroliers en mer qui doivent pouvoir garantir une étanchéité pendant de longues périodes, par exemple 20 ans. Le risque de pollution étant inacceptable, il est impératif de pouvoir être absolument sûr de l'absence de défaut dans la conduite tubulaire flexible réalisée.

En d'autres termes il est donc nécessaire que l'abaissement de température que subit le fluide caloporteur entre l'entrée et la sortie de sa circulation dans la conduite flexible, et qui est lié à l'apport de calories ainsi fourni à la gaine d'étanchéité et aux déperditions thermiques, soit inférieur à une limite déterminée.

Il en résulte que la vitesse de circulation du fluide caloporteur dans la conduite flexible doit être supérieure à une certaine valeur qui peut être déterminée en fonction des caractéristiques spécifiques de l'opération concernée de façon à ce que la température à la sortie de la conduite flexible ne soit pas inférieure à la limite inférieure définie ci-dessus. Le fluide caloporteur doit donc être pompé sous une pression permettant de surmonter la perte de charge résultant de la vitesse de circulation requise, et qui peut être relativement importante en fonction des valeurs envisagées de section de passage interne et de longueur de la conduite flexible.

Pour des longueurs de conduites relativement faibles, et en particulier si le diamètre est suffisamment important, on peut effectuer l'opération de réticulation sur une conduite flexible composée uniquement d'un tube étanche en polyoléfine, préférentiellement en polyéthylène, qui doit être ainsi réticulé. Dans le cas où le tube réticulé constitue la couche interne étanche d'un flexible du type à conduit interne lisse ("Smooth Bore") à structure composite, on peut procéder ensuite à la mise en place autour du tube interne des autres couches, couche d'armure de renforcement et gaine extérieure, ainsi qu'autres couches intermédiaires éventuelles.

Dans certains cas, la conduite tubulaire flexible est munie à l'intérieur de la gaine d'étanchéité, d'une couche, par exemple métallique, qui, bien que non étanche, s'intercale entre la gaine d'étanchéité à réticuler et le fluide utilisé pour provoquer la réticulation, par exemple de l'eau chaude. Une telle couche métallique est par exemple constituée par un feuillard agrafé dans le cas habituel des flexibles à conduit intérieur rugueux appelés "Rough Bore", fabriqués par la société demanderesse. Une telle couche intérieure non étanche semble, à priori, constituer un obstacle empêchant l'eau d'atteindre la gaine d'étanchéité à réticuler ; on s'attend ainsi, normalement, à constater que l'opération de réticulation avec l'apport d'eau par l'intérieur du tube devient, dans ces conditions, beaucoup moins efficace, voire même impossible à réaliser dans un délai raisonnable. Il a cependant été trouvé, de façon surprenante, qu'une gaine d'étanchéité en polyoléfine, préférentiellement en polyéthylène, disposée autour d'une couche interne non étanche peut être réticulée de façon efficace et dans des délais acceptables selon le procédé de l'invention, en faisant circuler de l'eau chaude à l'intérieur de la conduite tubulaire flexible. En effet, des essais sur prototypes ont montré, sans qu'on ait pu, à ce jour, expliquer ce phénomène, que l'eau nécessaire au développement du processus de réticulation peut se propager de façon homogène et sans retard excessif dans toutes les parties de la gaine plastique étanche malgré la présence de la couche interne non étanche, en particulier dans le cas où cette dernière est constituée, sous la forme d'un tuyau métallique flexible, par l'enroulement hélicoïdal d'une bande métallique profilée à double agrafage, telle qu'un feuillard agrafé remplissant la fonction de carcasse interne de la conduite tubulaire flexible. Dans un tel cas, dans le but de réduire la durée de l'opération de réticulation, il peut être avantageux selon l'invention, de prévoir des moyens garantissant non seulement la température pendant le temps de réaction, mais aussi une pression minimale. La zone critique étant l'extrémité en aval de la conduite flexible où l'on trouve à la fois la température la plus basse et la pression interne la plus faible, il a été trouvé en effet que le taux de réticulation peut atteindre plus rapidement la valeur désirée lorsque la pression interne exercée à l'extrémité en aval de la conduite flexible par la circulation du fluide utilisé est égale ou supérieure à la pression minimale définie ci-dessus. La valeur de la pression minimale est fonction des caractéristiques de la couche interne non étanche et de la structure de la conduite flexible, et peut être déterminée grâce à des essais de réglage préalables. Elle peut atteindre, selon les cas, par exemple de quelques bars à quelques dizaines de bars, la valeur minimale étant d'environ 3 bars, et les valeurs recommandées dans la pratique étant couramment de l'ordre de 20 bars. La circulation du fluide utilisé à l'intérieur de la conduite flexible doit être assurée sous une pression au moins égale à la somme de ladite pression minimale en aval et de la perte de charge dans la longueur de la conduite flexible et des canalisations de raccordement.

Selon le procédé de l'invention, on effectue à l'intérieur de la conduite flexible une circulation d'eau ou de fluide contenant de l'eau chauffé à une température suffisante, le tube ou la gaine interne d'étanchéité étant recouvert d'au moins une couche d'armure de renforcement. Ceci présente un avantage très intéressant. En particulier dans le cas des conduites de grande longueur, la conduite flexible soumise aux conditions imposées par l'opération de réticulation est apte à résister aux efforts qui lui sont appliqués et qui peuvent être relativement importants, pression interne (déterminée par la perte de charge et, éventuellement la pression minimale nécessaire pour les flexibles "Rough Bore"), effort de traction (induit, en particulier, par l'effet de fond dû à la pression interne), et effort d'écrasement pour les spires centrales de l'enroulement. La méthode nouvelle de réticulation, selon l'invention qui consiste à faire circuler le fluide utilisé par l'intérieur de la conduite flexible est ainsi facilitée et devient utilisable dans toutes les circonstances quelle que soit la longueur du flexible à traiter, grâce à la résistance mécanique que présente la structure particulière des couches constituant la paroi du flexible, alors que, précisément, les caractéristiques spécifiques de cette paroi rendent pour le moins très difficile l'utilisation d'un procédé qui consisterait à installer la conduite flexible enroulée à l'intérieur d'une enceinte remplie de vapeur d'eau chauffée.

De préférence, la conduite flexible est complètement terminée, y compris la gaine extérieure éventuelle, et avec ses organes de raccordement à chaque extrémité (les embouts) montés définitivement lorsqu'elle est raccordée à l'installation de réticulation assurant la circulation et le chauffage du fluide utilisé, la conduite flexible étant, de préférence, montée enroulée à spires jointives sur une bobine.

Selon un mode de mise en oeuvre particulièrement avantageux du procédé selon la présente invention, la conduite tubulaire flexible comporte, à l'extérieur de la gaine d'étanchéité interne à réticuler, une armure de résistance comportant au moins une nappe de fils distincts et enroulés hélicoïdalement avec un certain jeu latéral entre fils adjacents, les fils pouvant, en particulier, être métalliques, et étant de section quelconque, par exemple de forme rectangulaire à coins arrondis. Autour de l'ensemble des nappes d'armures de résistance, la conduite flexible est complétée par une gaine plastique de protection extérieure, normalement étanche. Une ou plusieurs gaines intermédiaires peuvent en outre être disposées entre le tube ou la gaine d'étanchéité interne et la gaine extérieure. On trouve ainsi, à l'extérieur de la gaine interne en polyoléfine à réticuler, une ou plusieurs nappes de fils d'armure disposés à l'intérieur de l'espace annulaire délimité d'une part par la gaine interne et, d'autre part, selon le cas, par la gaine extérieure ou une gaine intermédiaire. Dans une conduite flexible de ce type, en soi connu, le volume occupé, à l'intérieur dudit espace annulaire, par l'ensemble des fils d'armure laisse un espace annulaire libre qui peut valoir, par exemple entre 3% et 15% de l'espace annulaire total. Dans ce cas, la conduite flexible étant, lorsqu'elle est raccordée au dispositif de réticulation, de préférence complètement terminée, ou, au minimum, partiellement fabriquée de manière à comporter au moins une gaine plastique externe et une ou plusieurs nappes d'armure entre ladite gaine externe et la gaine interne, l'amélioration du procédé selon l'invention consiste à mettre en communication avec l'extérieur l'espace annulaire libre qui est composé d'une série de chenaux libres continus de configuration générale hélicoïdale, chaque chenal correspondant à l'espace ouvert entre deux fils d'armure adjacents. Il a été trouvé qu'on extrait ainsi à l'extérieur de la conduite du fluide, en phase liquide et/ou gazeuse, qui se dégage, par l'extérieur la gaine sujette à réticulation, en fonction du développement du processus de réticulation. Bien que les quantités de fluide ainsi extraites soient relativement faibles, cette procédure permet d'améliorer sensiblement l'efficacité de l'opération de réticulation. Normalement, les fluides ainsi extraits se trouvent évacués à la pression atmosphérique. Alternativement, on peut augmenter encore l'efficacité de la procédure en réalisant l'extraction forcée des fluides. Il est par exemple possible d'injecter un fluide liquide et/ou gazeux, par exemple de l'eau ou de l'air à l'une des extrémités de l'espace annulaire pour assurer l'extraction des fluides. Avantageusement, l'extraction des fluides est accélérée par aspiration par exemple en utilisant une pompe à vide en créant un vide plus ou moins poussé dans l'espace annulaire. L'extraction des fluides à partir de l'espace annulaire libre peut se faire de diverses façons. On peut, par exemple, utiliser un passage percé radialement à travers l'épaisseur d'une pièce métallique annulaire disposée autour de la paroi de la conduite flexible et faisant partie de l'embout monté à une extrémité de la conduite ; un exemple de perçage de ce genre est décrit dans FR-A- 2 630 809. On peut également pratiquer une ou plusieurs ouvertures provisoires à travers la gaine externe de la conduite flexible, les dites ouvertures étant obturées lorsque l'opération de réticulation est terminée.

Il est bien entendu que l'utilisation d'un panier (ou une cuve) dans lequel on love la conduite tubulaire flexible à réticuler, ne sort pas du cadre de la présente invention.

De préférence, des moyens d'isolation thermique sont disposés autour du volume occupé par la conduite flexible, par exemple, panneaux isolants ou couche souple isolante montée sur l'extérieur de la bobine (ou autre organe de stockage).

Lorsque la réticulation de la gaine interne d'étanchéité est effectuée une fois que la fabrication de la conduite flexible est achevée, les embouts étant montés aux deux extrémités, il est intéressant de pratiquer un essai hydrostatique avant de commencer l'opération de réticulation, la pression d'épreuve pouvant être égale à la pression maximale de service (design pressure) ou à 1,5 fois cette pression. Une conduite tubulaire flexible qui, par suite d'un défaut, n'est pas capable de supporter la pression d'épreuve est rejetée et l'on ne va pas poursuivre le processus de fabrication par réticulation de la gaine. Avantageusement, on utilise le même dispositif d'installation et de branchement de la conduite flexible pour réaliser l'essai hydrostatique et la réticulation.

Après achèvement de la réticulation, on procède avantageusement à l'essai hydrostatique final, la pression d'épreuve étant couramment égale à 1,5 fois la pression maximale de service. Cette procédure apporte l'avantage de n'avoir à effectuer le remplissage et la vidange du flexible qu'une seule fois. Il est encore possible, pour gagner du temps, de réaliser l'essai de pression hydrostatique pendant l'opération de réticulation en portant la pression de pompage du fluide utilisé à la valeur spécifiée pour l'essai, mais on est obligé de dimensionner l'installation de réticulation pour résister à la pression d'épreuve.

Dans la mesure où la gaine d'étanchéité empêche la fuite d'eau vers l'extérieur de la conduite tubulaire flexible, l'eau contenue dans la conduite tubulaire flexible ne pourra pas servir à l'hydrolyse d'autres couches de polyoléfine, notamment du polyéthylène, de la conduite tubulaire flexible. Toutefois, la réticulation d'autres gaines en polyoléfine, notamment en polyéthylène, comme par exemple une couche de protection externe, ne sort pas du cadre de la présente invention. Pour réaliser la réticulation par hydrolyse de gaines plastiques externes, il est nécessaire de fournir l'eau nécessaire à la réaction. Ceci peut être réalisé, en soumettant la gaine à réticuler à l'action de vapeur d'eau chauffée, la conduite flexible étant logée dans une enceinte fermée où l'on fait circuler la vapeur d'eau. Alternativement, la chaleur peut provenir aussi bien du fluide chaud circulant dans la conduite tubulaire flexible pendant le processus de réticulation de la gaine d'étanchéité, en totalité ou en combinaison avec la chaleur apportée par la vapeur d'eau.

Dans le cas de la réticulation d'une gaine extérieure ou intermédiaire, et également dans le cas de la gaine interne d'étanchéité, l'eau nécessaire à la réaction d'hydrolyse peut, en totalité ou en partie, être déjà contenue à l'intérieur du matériau plastique à réticuler, de l'eau pouvant être produite à l'intérieur du matériau au fur et à mesure de la progression du processus de réticulation.

La présente invention s'applique notamment à la réalisation de conduites tubulaires flexibles de structures composites, comportant au moins une armure résistant à la pression interne et aux charges axiales et, de préférence, une enveloppe extérieure telle qu'une gaine. L'armure peut comprendre une ou plusieurs nappes constituées par l'enroulement de fils métalliques ou plastiques, ou en matériau composite et/ou de fibres. En particulier, lesdites conduites tubulaires flexibles peuvent être du type à haute résistance mécanique utilisables notamment en exploitation de champs pétroliers sous-marins. Elles peuvent également être du type flexible hydraulique, en particulier dans le cas des ombilicaux constitués par l'assemblage de plusieurs lignes hydrauliques qui sont utilisées également en exploitation des champs pétroliers sous-marins.

L'invention sera mieux comprise au moyen de la description ci-après des figures annexées données comme des exemples non limitatifs parmi lesquels :
- la figure 1 est un organigramme du procédé selon la présente invention;
- la figure 2 est une vue en perspective d'un exemple de réalisation de conduite tubulaire flexible selon la présente invention;
- la figure 3 est un écorché montrant la structure d'un deuxième exemple de réalisation de conduite tubulaire flexible selon la présente invention;
- la figure 4 est un écorché montrant la structure d'un troisième exemple de réalisation de conduite tubulaire selon la présente invention;
- la figure 5 est un écorché montrant un quatrième exemple de réalisation de conduite tubulaire flexible selon la présente invention;
- la figure 6 est un schéma montrant un premier exemple de réalisation d'un dispositif pour la mise en oeuvre du procédé selon la présente invention;
- la figure 7 est un schéma montrant un second exemple de réalisation d'un dispositif pour la mise en oeuvre du procédé selon la présente invention;
- la figure 8 est un schéma montrant un exemple de réalisation d'une conduite tubulaire flexible ombilicale selon l'invention;
- la figure 9 est un schéma montrant une conduite tubulaire flexible de type flexible hydraulique incorporée à la conduite tubulaire flexible ombilicale de la figure 8;
- la figure 10 est un schéma illustrant un embout susceptible d'être mis en oeuvre dans le procédé selon la présente invention.

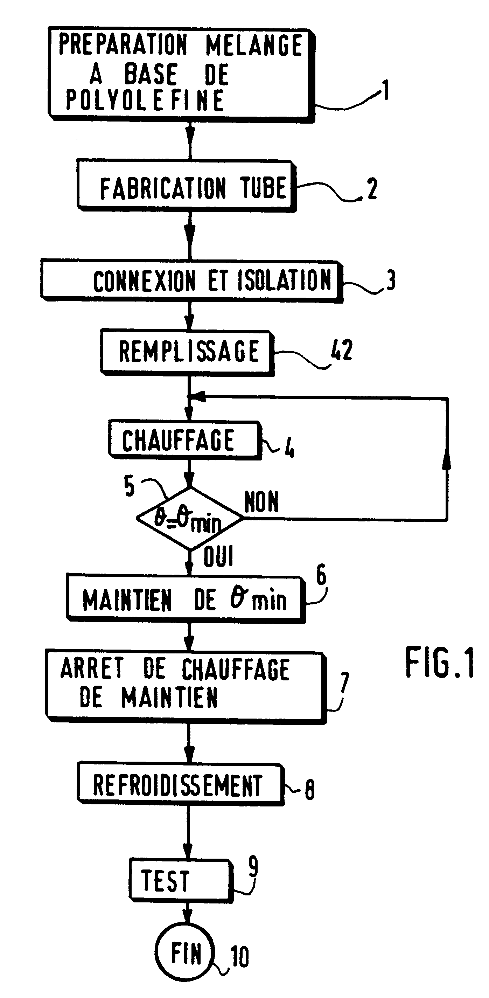

Sur les figures 1 à 10 on utilise les mêmes références pour désigner les mêmes éléments.

Sur la figure 1, on peut voir les étapes du procédé selon la présente invention.

En 1, on effectue la préparation d'un matériau plastique nécessaire à l'obtention de la gaine d'étanchéité en polyoléfine.

On va en 2.

En 2, on effectue la fabrication de conduites tubulaires flexibles.

On va en 3.

En 3, on effectue la connexion de la conduite tubulaire flexible à un dispositif, ci après appelé dispositif d'alimentation en fluide, pour la mise en oeuvre du procédé selon la présente et l'on réalise une éventuelle isolation thermique de la conduite tubulaire flexible.

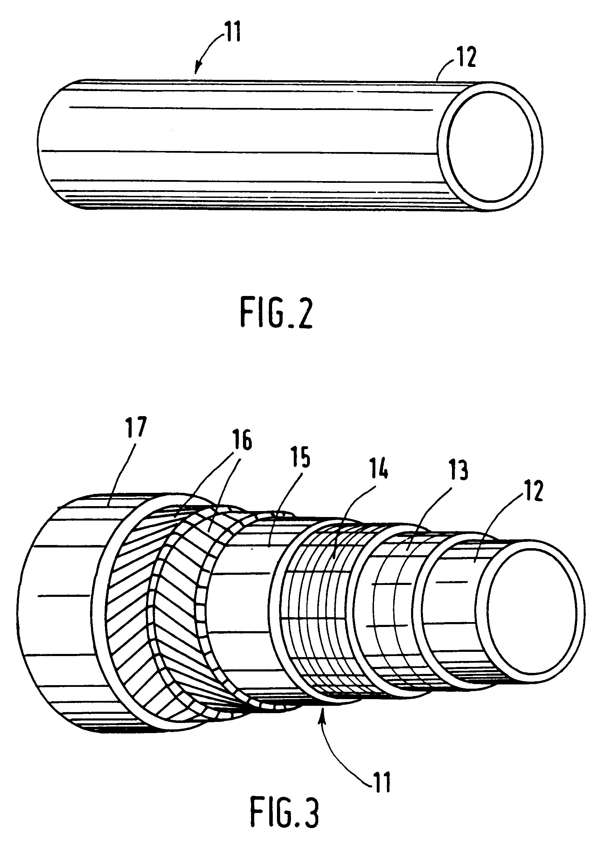

Il est ainsi particulièrement avantageux, dans le cas où la conduite tubulaire flexible concernée comporte d'autres couches autour de la gaine d'étanchéité interne à réticuler (ainsi qu'illustré sur les figures 3,4 et 5), de procéder à l'opération de réticulation lorsque la fabrication des couches successives de la conduite est complètement terminée, les deux embouts d'extrémité étant montés définitivement, et permettant de raccorder directement la conduite au dispositif d'alimentation en fluide. Ce mode de mise en oeuvre présente l'avantage de rendre possible la réalisation de conduites flexibles présentant une longueur continue plus importante, malgré l'augmentation des pertes de charge, du fait que la structure de la conduite flexible est rendue capable, grâce à la présence des armures de renfort, de résister aux pressions internes élevées ainsi créées.

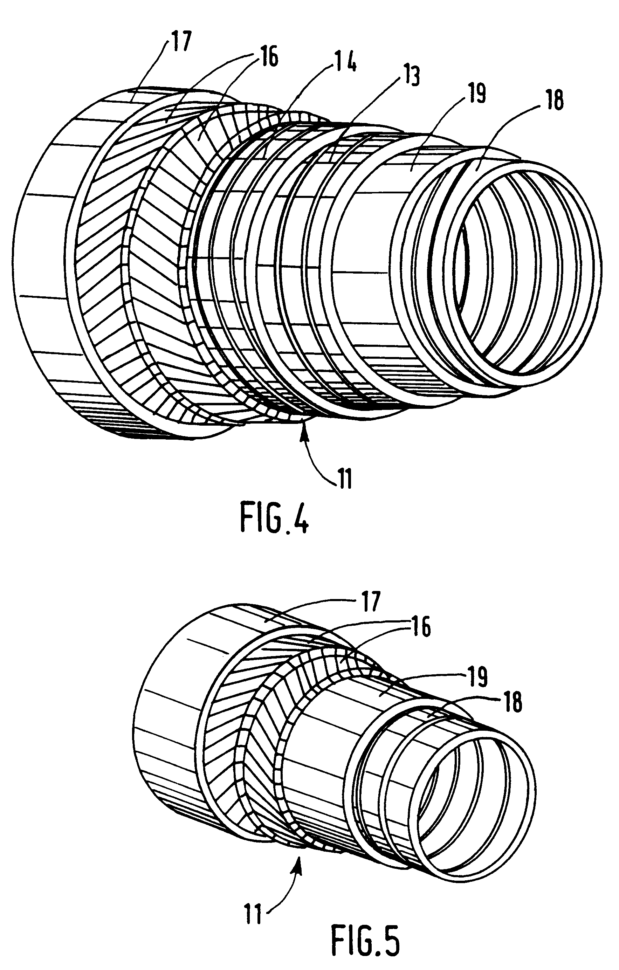

Alternativement, il est également possible de procéder à l'opération de réticulation avant d'avoir réalisé l'ensemble des couches qui doivent être mises en place autour de la gaine d'étanchéité à réticuler. On peut ainsi raccorder la conduite flexible au dispositif d'alimentation en fluide soit directement après la fabrication par extrusion de la gaine d'étanchéité 12 (figure 2 ou 3), ou de la gaine interne d'étanchéité 19 recouvrant le feuillard agrafé 18 (figure 4 ou 5), soit lorsque seulement une ou plusieurs des couches suivantes ont été réalisées, une ou plusieurs des couches extérieures n'étant pas encore fabriquées. Pour faciliter le raccordement, on peut monter aux extrémités des embouts provisoires.

On va en 42.

En 42 on effectue le remplissage de la conduite tubulaire flexible.

Alternativement, après remplissage et avant de commencer le chauffage, on peut procéder à un essai de mise sous pression préliminaire.

On va en 4.

En 4, on effectue le chauffage du fluide remplissant la conduite tubulaire flexible, avantageusement en assurant la circulation dudit fluide.

On va en 5.

En 5, on vérifie si la température minimale
ϑₘᵢₙ nécessaire à l'obtention de la réticulation, correspondant au temps de traitement prévu, a été atteinte.

Sinon, on va en 4.

Si oui, on va en 6.

En 6, on poursuit la circulation du fluide en maintenant le chauffage assurant le maintien de la température ϑ ₘᵢₙ à l'intérieur de la conduite tubulaire flexible pendant la durée fixée pour l'opération.

On va en 7.

En 7 on arrête le chauffage de maintien de la température à un temps t ₘᵢₙ auquel la réticulation désirée a été atteinte.

On va en 8.

En 8, on effectue le refroidissement de la conduite tubulaire flexible selon la présente invention.

On va en 9.

En 9, on effectue avantageusement un test de la conduite tubulaire flexible selon la présente invention.

On va en 10.

En 10, la conduite tubulaire flexible selon la présente invention est réalisée et testée. Le procédé selon la présente invention a pris fin.

La préparation des matériaux plastiques de l'étape 1 dépend du type de conduite tubulaire flexible qu'on veut pouvoir réaliser. Pour la réalisation de conduites pour l'exploitation de champs pétroliers en mer, exigeant des conduites tubulaires flexibles de très haute qualité on réalise par exemple les deux composés suivants.

Pour le premier composé, on utilise par exemple du polyéthylène dont la densité par rapport à l'eau est supérieure à 0,930. On utilise avantageusement un homopolymère ou un copolymère d'éthylène ou un mélange des deux dont la densité est comprise entre 0,931 et 0,965. La première étape consiste à créer des radicaux libres par action d'un initiateur de réaction (peroxyde) de façon à permettre le greffage des fonctions silanes. On effectue alors un greffage de motifs comprenant une ou plusieurs fonctions silanes. Avantageusement, on utilise un agent de type VTMOS (vinyl tri-methoxy-silane), du chloropropyltrimethyl-metoxy-silane, des epoxy tri-metoxy-silane ou du metacrylate tri-methoxy-silane. On effectue une extrusion et une granulation de ce "mélange greffé"

Pour le second composé, on prépare un mélange de polyéthylène, d'un ou plusieurs agents permettant de résister aux rayonnements ultra-violets, d'un ou plusieurs anti-oxydants et d'un catalyseur. On utilise par exemple 500 ppm de catalyseur. On utilise par exemple comme catalyseur du dioctyl-dilaurate d'étain ou du di-butyle-dilaurate d'étain. La quantité de polyéthylène est suffisante pour permettre l'extrusion du second mélange couramment appelé "mélange maître". Après l'extrusion, on effectue une granulation.

Pour obtenir le matériau granulé à mettre en oeuvre pour fabriquer par extrusion la gaine d'étanchéité en polyéthylène à réticuler on effectue le mélange des granulés des deux composés obtenus de façon à ce que les proportions du polyéthylène greffé silane correspondent par exemple à 98 % et que le mélange contenant l'anti-oxydant, l'anti U.V. et le catalyseur couramment appelé "mélange maître" soit équivalent à 2 %.

Il est alors possible de réaliser par extrusion le tube ou la gaine d'étanchéité d'une façon tout à fait classique. Les opérations décrites correspondent à la mise en oeuvre d'un procédé connu, du type "SIOPLAS". Il serait également possible de procéder à la fabrication de la gaine extrudée en suivant un autre procédé faisant appel à une réaction d'hydrolyse, tel que par exemple le procédé "MONOSIL".

L'étape 2 de fabrication de la conduite tubulaire flexible dépend du type de conduite tubulaire flexible que l'on veut fabriquer.

Dans le cas d'une conduite tubulaire flexible 11 illustrée sur la figure 2 comportant uniquement un tube plastique étanche 12 en polyoléfine à réticuler, avantageusement en polyéthylène haute densité, la fabrication de la conduite tubulaire flexible se résume à une extrusion.

La conduite tubulaire flexible 11 de la figure 3, comporte une gaine d'étanchéité 12 interne en polyéthylène, une première voûte 13 pour résister à l'effet radial de la pression, une seconde voûte pour augmenter la résistance à la pression 14, une gaine plastique intermédiaire 15, deux nappes d'armures croisées 16 pour résister à la traction axiale, et une couche plastique de protection externe 17.

La couche 12 assure l'étanchéité notamment du pétrole brut. Elle est avantageusement réalisée par extrusion à partir du mélange granulé à réticuler, préparé, comme décrit ci-dessus.

La couche 13 permet de résister à la pression interne ou à la pression externe et garantit l'absence d'interstices trop grands entre spires. Elle est réalisée par enroulement à faible pas (spiralage) d'un fil de forme auto-agrafable (par exemple en forme de Z).

La couche 14 augmente la résistance à la pression interne et externe, elle est réalisée par spiralage d'un fil, de section, par exemple, rectangulaire.

La couche 15 est réalisée couramment par extrusion. Elle peut être étanche ou non étanche.

Les armures croisées 16 permettent de résister à la traction axiale.

La couche externe 17 assure la protection de la conduite tubulaire flexible pendant les opérations de pose une fois la conduite tubulaire flexible posée, elle empêche l'eau de mer de pénétrer à l'intérieur de la conduite tubulaire flexible. La couche 17 est réalisée couramment par extrusion.

La conduite tubulaire flexible 11 illustrée sur la figure 4, comporte en outre un feuillard agrafé 18 placé à l'intérieur d'une gaine d'étanchéité 19 en polyoléfine à réticuler.

En fonction des caractéristiques particulières propres à la structure de la conduite tubulaire flexible 11 à traiter, la présence du feuillard agrafé 18 à l'intérieur de la gaine d'étanchéité 19 peut retarder, plus ou moins, le développement du processus de réticulation. Il a été découvert qu'en maintenant une pression interne suffisante dans la conduite tubulaire flexible 11, par exemple 20 bars, on pouvait atteindre plus rapidement la valeur désirée du taux de réticulation. Ceci permet, en particulier, d'augmenter la partie de la surface intérieure de la gaine d'étanchéité interne à réticuler 19 qui constitue l'interface en contact avec l'eau, en phase liquide ou gazeuse, présente dans le fluide qui est contenu dans la conduite tubulaire flexible.

Sur la figure 5 on peut voir une conduite tubulaire flexible 11 simplifiée comportant un feuillard agrafé 18 entouré par une gaine d'étanchéité 19, des armures croisées 16 de résistance à la traction posées avec un angle sensiblement égal à 55° pour réaliser une conduite tubulaire 11 équilibrée et une gaine externe 17.

Il est bien entendu que l'utilisation d'armures non métalliques, utilisant par exemple des fibres, par exemple des fibres de verre, d'aramide ou des fibres disposées dans une matrice thermodurcissable ou thermoplastique, ne sort pas du cadre de la présente invention.

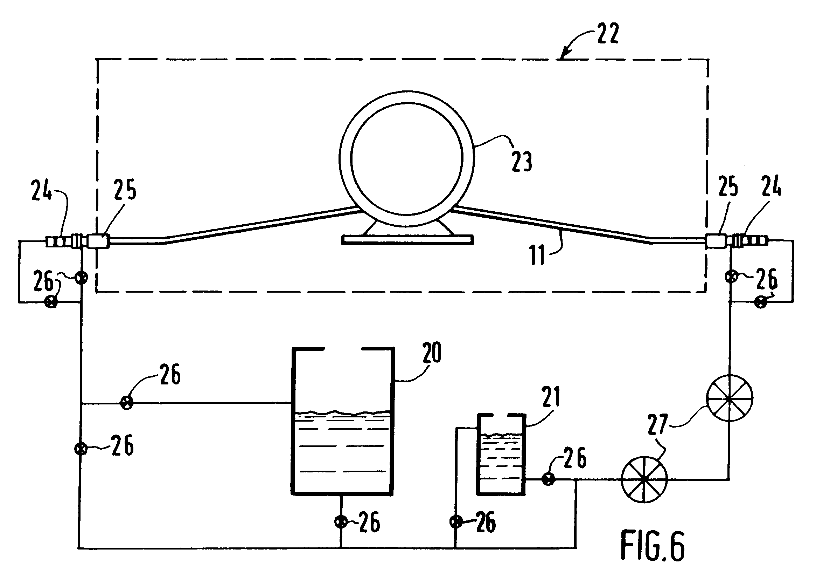

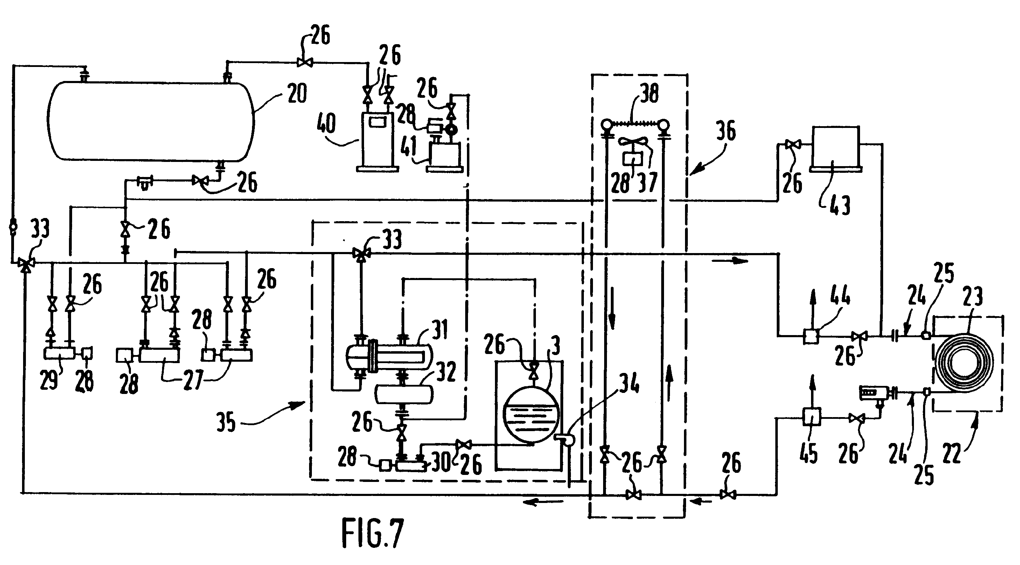

En 3 (de la figure 1) on effectue la connexion de la conduite tubulaire flexible réalisée à un dispositif d'alimentation en fluide tel qu'illustré sur les figures 6 ou 7.

Une des originalités de l'invention réside dans l'utilisation de la conduite tubulaire flexible elle-même pour réaliser la réticulation de la gaine d'étanchéité.

En 42, on assure le remplissage de la conduite tubulaire flexible avec un fluide assurant l'apport de chaleur et/ou d'eau nécessaire à une réticulation par hydrolyse.

Avantageusement, on utilise de l'eau à une température élevée, toutefois inférieure au seuil de fusion des petites cristallites soit environ 120°C pour assurer l'élévation puis le maintien de la température ainsi que l'apport de l'eau nécessaire à la réaction d'hydrolyse. L'eau est de préférence sous forme liquide. Toutefois, l'utilisation de la vapeur d'eau ne sort pas du cadre de la présente invention. Pour une isolation thermique donnée, il sera souvent nécessaire d'obtenir des débits très importants de vapeur d'eau pour assurer le maintien de la température minimale garantissant la réalisation de la réticulation désirée pendant le temps de réaction. Toutefois, la vapeur d'eau ayart une très faible viscosité, le maintien de ces débits peut être assuré. Avant de procéder à la circulation de vapeur chauffée, il est avantageux de faire circuler de l'air chaud.

Avantageusement, lors de l'opération de remplissage avec de l'eau de la conduite tubulaire flexible, on s'assure de chasser l'air pour éviter de former un mélange difficilement contrôlable.

En 4, on assure le chauffage initial nécessaire pour atteindre à l'extrémité en aval de la conduite flexible au moins la température minimale ϑ ₘᵢₙ à laquelle on veut voir se réaliser la réaction de réticulation. Cette condition est obtenue en effectuant la circulation du fluide utilisé, par exemple de l'eau, avec un débit suffisamment élevé pour que l'abaissement de la température de l'extrémité amont à l'extrémité en aval de la conduite reste inférieure à la valeur minimale fixée pour l'opération, en fonction, en particulier, de la durée prévue pendant laquelle on doit assurer la circulation d'eau chaude en maintenant la température dans les limites déterminées. Simultanément, on s'assure que l'intensité du chauffage reste à l'intérieur des limites telles que la température à l'extrémité amont de la conduite flexible reste inférieure à la température maximale ϑₘₐₓ imposée. Cette limite ϑₘₐₓ, par exemple 98°C, est fixée de façon à ce que la résistance à la compression du polyéthylène reste supérieure à un certain minimum, par exemple 5 MPa.

Comme on le voit en 5, on maintient le chauffage initial réglé de façon à ce que la température d'entrée ne dépasse pas ϑ ₘₐₓ, ainsi que le débit, tant que la température minimale n'a pas été atteinte.

Ainsi, par exemple, l'intensité du chauffage et le débit d'eau sont réglés de façon à ce que la température ϑ en tout point de la gaine à réticuler soit maintenue entre 92 et 98°C (98°C à l'entrée et 92°C à la sortie).

Quand la température minimale a été atteinte, on continue, comme illustré en 6, à faire circuler l'eau en contrôlant l'intensité du chauffage et le débit de façon que les températures à l'entrée et à la sortie de la conduite flexible restent respectivement inférieures à ϑₘₐₓ et supérieures à ϑₘᵢₙ. L'opération est ainsi poursuivie pendant un temps minimal garantissant le taux de réticulation désiré. Par exemple, avec le polyéthylène décrit plus haut, on obtient pour une température minimale de 92°C à l'intérieur de la conduite tubulaire flexible, pendant un temps t égal à quatre jours, une réticulation d'au moins 75 %; une prolongation du processus permet en combinaison avec une augmentation du taux de VTMS, de peroxyde et de catalyseur d'atteindre une réticulation de 85 %. La durée minimale pendant laquelle l'opération de réticulation doit être réalisée pendant l'étape 6, à partir du moment où la température minimale ϑₘᵢₙ est atteinte en tout point de la canalisation, est déterminée à partir d'essais préliminaires qui ont pour but de déterminer la cinétique de réticulation. On peut ainsi procéder à la réticulation de divers échantillons d'un matériau identique à celui prévu pour la fabrication de la gaine en polyoléfine réticulée, ces essais de réticulation étant réalisés à des températures variées. Pour chacune des températures de réticulation ainsi essayées, on mesure, en fonction de la durée d'opération, l'évolution du taux de réticulation obtenu, cette détermination pouvant avantageusement être faite par la mesure du taux de gel. Dans les conditions de mise en oeuvre de l'invention, il a été trouvé que la température de réticulation doit être, avantageusement, supérieure à 85°C et de préférence à 90°C, ce qui permet d'obtenir dans un délai raisonnable, un taux de réticulation au moins égal à 80% du taux de réticulation potentiel, et pouvant, couramment, atteindre près de 100% de cette valeur. Pour un matériau réticulable de composition donnée, le taux potentiel correspond à la valeur limite vers laquelle tend le taux lorsque la durée de l'opération augmente. Il est particulièrement important dans le cas de la fabrication des conduites flexibles destinées aux installations pétrolières en mer, de réduire le temps requis pour l'opération car il retarde le délai de livraison, ce délai étant généralement d'une importance critique.

Sur la base des essais préliminaires, on détermine ainsi la durée minimale requise pour l'opération de façon à obtenir le taux de réticulation fixé, en fonction de la température envisagée, cette température devant correspondre à la température minimale à respecter en tout endroit du matériau soumis à réticulation, c'est-à-dire dans la pratique, à la température de sortie à l'extrémité en aval de la conduite raccordée au dispositif d'alimentation en fluide. La température à l'extrémité amont étant fixée à une valeur donnée limitée à un maximum ϑ ₘₐₓ définie comme décrit ci-dessus, on peut alors déterminer le débit de circulation d'eau nécessaire pour maintenir la chute de température entre l'entrée et la sortie inférieure à la valeur prévue et les pertes de charge correspondantes ainsi que, en fonction de l'isolation thermique 22, la puissance de chauffage permettant de maintenir la température à l'entrée à la valeur fixée. Il est ainsi possible, dans chaque cas, d'optimiser les paramètres de conduite de l'opération, la durée totale pouvant être réduite au prix d'une augmentation du débit et de la puissance de chauffage.

Les paramètres de conduites de l'opération étant ainsi fixés pour une fabrication donnée, on peut garantir sur ces bases la qualité finale du produit en réalisant l'opération de réticulation pendant une durée au moins égale à la durée minimale déterminée, comme ci-dessus, le débit de circulation d'eau chaude étant maintenu à une valeur au moins égale à la valeur également mentionnée ci-dessus. La température à l'entrée étant mesurée par un capteur, par exemple un thermocouple 44 monté sur le circuit d'alimentation en fluide juste avant son raccordement avec l'extrémité amont de la conduite flexible, l'intensité de chauffage est réglée en permanence de façon à ce que la température à l'entrée soit toujours au moins égale à la valeur prévue comme ci-dessus, tout en restant inférieure à la limite ϑ ₘₐₓ. Par référence aux essais préliminaires, on a ainsi l'assurance que le taux de réticulation obtenu est en tout point de la conduite flexible, au moins égal au taux fixé, y compris à l'extrémité en aval de la conduite, là où la température, et par conséquent le taux de réticulation, sont les plus faibles. On peut compléter le dispositif avec une mesure directe de la température à la sortie par un deuxième capteur, par exemple un thermocouple 45 sur le circuit d'alimentation en fluide juste après son raccordement avant l'extrémité en aval de la conduite flexible.

En outre, on peut, lorsqu'une opération de réticulation a été réalisée, pour la première fois, sur une conduite flexible de caractéristiques données et dans des conduites opérationnelles données, vérifier le résultat obtenu en coupant l'embout de l'extrémité en aval pour mesurer directement le taux de réticulation. Cette vérification sur la première fabrication permet alors de qualifier toutes les fabrications ultérieures pour les conduites flexibles de mêmes caractéristiques.

Dès que le temps minimal a été atteint, on est sûr d'être en présence d'une gaine d'étanchéité réticulée au taux désiré.

On notera qu'une première étape préliminaire de réticulation a déjà été réalisée pendant la phase transitoire de montée en température correspondant aux étapes 4 et 5, et que, de la même façon, une étape complémentaire de réticulation est accomplie pendant la phase transitoire finale de refroidissement correspondant à l'étape 8. Ces phases complémentaires du processus de réticulation venant s'ajouter à l'opération principale de réticulation qui est accomplie pendant une durée au moins égale à la durée minimale et correspond à l'étape 6, il en résulte une marge de sécurité permettant de renforcer l'assurance que le taux de réticulation visé a bien été obtenu. Alternativement, il est également possible de prendre en compte, en tout ou en partie, le complément de processus de réticulation résultant des phases transitoires initiale et finale.

A partir de ce moment là, (étape 7) de la figure 1, il est possible d'effectuer le refroidissement (étape 8) de la conduite tubulaire flexible. Ce refroidissement peut être obtenu par exemple en enlevant l'isolation thermique 22, décrite ci-après, mise en place à l'étape 3 et ou en assurant le refroidissement de l'eau circulant dans la conduite tubulaire flexible.

Avantageusement, pour plus de sécurité, on effectue une mesure de la réticulation obtenue chaque fois que l'on change de caractéristique importante de la conduite tubulaire flexible risquant d'influencer le processus de réticulation. Ce test est par exemple effectué en démontant l'embout du côté aval, en découpant une partie de la gaine réticulée et en mesurant le taux de réticulation atteint. On remonte un embout si la conduite tubulaire flexible répond au cahier des charges.

Les conduites tubulaires flexibles doivent nécessairement subir en fin de fabrication un test en les soumettant à une pression hydrostatique. Dans le cas où la conduite tubulaire flexible 11 se trouve dans son état de fabrication final, les embouts d'extrémité 25 étant déjà montés, il est possible de procéder à l'étape 9 à l'essai de pression de fin de fabrication. Dans le cas, où la conduite 11 raccordée au dispositif d'alimentation en fluide se trouve dans un état intermédiaire de fabrication et doit être complétée par d'autres couches de la structure telles que voûte de pression et/ou armure et/ou autres gaines extrudées, la conduite est déconnectée à la fin de l'étape 8, en vue de procéder à l'achèvement de la fabrication de façon classique. Il est bien entendu que les conduites tubulaires flexibles non testées où dont le test est effectué ultérieurement, ne sortent pas du cadre de la présente invention.

Sur la figure 6, on peut voir un premier exemple de réalisation de dispositif d'alimentation en fluide selon la présente invention. Le dispositif de la figure 6 comporte une source d'eau chaude et des moyens pour faire circuler l'eau chaude dans la conduite tubulaire flexible 11. L'eau chaude provient par exemple d'un premier réservoir 20 contenant de l'eau à 80°C pour assurer le préchauffage de la conduite tubulaire flexible 11 ou d'un second réservoir 21 contenant l'eau dont la température est comprise entre 95 et 98°C. Les réservoirs 20 et 21 sont reliés, à l'aller comme au retour, par des vannes 26 au circuit général d'eau. Dans l'exemple de la figure 6, l'eau est mise en circulation par un ensemble de deux pompes 27. La pression assurée par les pompes 27 est déterminée en fonction du débit requis par les pertes de charge dans la longueur de la conduite flexible et dans les canalisations et organes du dispositif, ainsi que, le cas échéant, par la pression minimale prévue à l'extrémité en aval de la conduite flexible principale. Le circuit d'eau principal est connecté, par l'intermédiaire de dispositifs de connexion 24, permettant l'introduction de racleurs ou autres souris dans le circuit de canalisation, à des embouts 25 préalablement montés à chaque extrémité de la conduite tubulaire flexible 11. Dans l'exemple illustré sur la figure 6, la conduite tubulaire flexible est enroulée sur un support 23, avantageusement sur une bobine. Elle est isolée thermiquement par une isolation thermique 22. Le seul fait d'enrouler la conduite tubulaire flexible sur une bobine 23 limite les déperditions calorifiques à une puissance de, par exemple, 180 kW pour une température externe de 0°C et une température d'entrée de 98°C et avec une différence de température entre l'entrée et la sortie de la conduite tubulaire flexible à réticuler de 6°C. L'isolation thermique peut consister par exemple en une isolation des joues et des spires externes. Les déperditions thermiques dépendent des dimensions de la bobine et de la qualité de l'isolation. Dans un exemple de réalisation de l'isolation thermique, les pertes sont égales à 70 kW pour une bobine d'un diamètre de 8,2 m.

L'isolation thermique est particulièrement avantageuse dans le cas des diamètres relativement petits, inférieurs à environ 100 mm.

Sur la figure 7, on peut voir un second exemple de réalisation du dispositif d'alimentation en fluide selon la présente invention. Le dispositif de la figure 7 comporte un réservoir 20 susceptible de remplir le circuit de circulation d'eau ainsi que la plus grosse conduite tubulaire flexible que l'on veut pouvoir traiter. Le dispositif selon la présente invention comporte un dispositif de chauffage 35 assurant l'élévation et le maintien de la température nécessaire à la réaction de réticulation. La circulation de l'eau de la conduite à réticuler est assurée, par exemple, par une des deux pompes 27 présentes dans le circuit. Le maintien d'une pression minimale à l'extrémité en aval de la conduite tubulaire flexible est avantageusement assuré par une pompe 29 induisant, par exemple une pression inverse de 20 bars. Alternativement, la pression minimale peut être obtenue en faisant circuler le fluide sortant de la conduite flexible à travers un orifice calibré tel qu'une buse, (choke) ou en branchant sur le circuit de fluide un accumulateur à gaz réglé à la pression voulue.

Avantageusement, le refroidissement de l'étape 8 de la figure 1 est assuré par un dispositif de refroidissement 36 qui peut être isolé par des vannes 26. Dans l'exemple illustré sur la figure 7, un groupe d'épreuve hydraulique 43 permet d'assurer l'essai de pression de la conduite tubulaire flexible après réticulation. Avantageusement, le dispositif selon la présente invention comporte des dispositifs classiques permettant le fonctionnement des circuits hydrauliques. L'entraînement, notamment des pompes, est assuré par des moteurs électriques 28. Un adoucisseur 40 fournit au réservoir 20 une eau débarrassée des sels minéraux. Un poste d'injection 41 fournit au circuit hydraulique des agents inhibiteurs de corrosion.

On peut être amené à devoir traiter des conduites tubulaires flexibles dont le diamètre interne est compris par exemple entre 10 et 500 mm, typiquement entre 75 et 300 mm. De plus, pour un même diamètre de bobine de stockage 23 la longueur de stockage augmente lorsque le diamètre de la conduite diminue. Par exemple, pour des conduites tubulaires flexibles classiques pour l'exploitation pétrolière en mer, on peut stocker 6,2 km de conduites tubulaires flexibles d'un diamètre interne de 75 mm et 950 m de conduites tubulaires d'un diamète interne de 300 mm. Les pertes de charge augmentant avec la longueur et lorsque le diamètre diminue, il s'avère avantageux d'utiliser pour les conduites tubulaires flexibles dont le diamètre interne est par exemple inférieur à 75 mm une pompe différente de celle utilisée pour les conduites tubulaires flexibles d'un diamètre interne égal ou supérieur à 75 mm.

Le débit nécessaire pour maintenir la différence de température entre l'entrée et la sortie inférieure à la limite fixée est assuré par les pompes 27. Pour les dimensions en diamètre et longueur de conduites tubulaires flexibles habituellement réalisées, telles que décrites ci-dessus, le débit nécessaire varie entre par exemple 5 tonnes d'eau à l'heure pour un diamètre interne de 50 mm, et environ 50 tonnes à l'heure pour un diamètre interne égal ou supérieur à 150 mm. Dans le cas où les capacités de stockage sur bobine ou dans un panier pourraient être, dans l'avenir, 2 à 5 fois, par exemple, plus grandes qu'actuellement; le débit nécessaire pourrait atteindre 100 à 200 tonnes à l'heure.

Dans le cas de la figure 7, les moyens de chauffage 35 nécessaires, dans une première phase de l'opération correspondant aux étapes 4 et 5, pour obtenir la température ϑ ₘᵢₙ en tout point de la conduite 11 dans un délai raisonnable, (c'est en général le critère de dimensionnement de la puissance de chauffage) et, par la suite, pendant l'étape 6 à compenser les déperditions thermiques de manière à assurer le maintien de la température au dessus de ϑ ₘᵢₙ , comprennent une chaudière 33, générant de la vapeur basse pression, effectuant le réchauffement du circuit d'eau principal, par l'intermédiaire d'un échangeur 31. Avantageusement, le circuit vapeur basse pression comporte un groupe d'expansion 32. Le retour de la vapeur condensée à la chaudière 33 est assuré par une pompe 30. Dans l'exemple illustré, la chaudière est chauffée par des brûleurs à gaz 34. La chaudière a par exemple une puissance de 600 kW pour le traitement d'une bobine et de 1000 kW pour le traitement simultané de quatre bobines 23 de conduite tubulaire flexible. Le capteur 45, par exemple un thermocouple, disposé sur la canalisation de circulation de l'eau à proximité de la connexion aval 24, permet de mesurer la température de l'eau à la sortie, et de vérifier que cette température à la sortie reste supérieure ou égale à la température minimale garantissant la réalisation de la réticulation désirée, ϑₘᵢₙ.

Pour pouvoir garantir que la température de l'eau circulant dans la conduite tubulaire flexible à traiter n'excède pas la température maximale fixée ϑₘₐₓ, le circuit d'eau est muni d'une première vanne trois voies 39, permettant de mélanger l'eau chaude provenant de l'échangeur 31 avec l'eau refroidie en provenance de la conduite flexible et qui a été portée par l'une des pompes 27 à la pression permettant d'assurer la valeur de débit fixée. On peut ainsi régler la température d'entrée dans la conduite flexible à la valeur fixée, la température d'entrée étant mesurée par un capteur 44, par exemple un thermocouple, ce qui permet de garantir que la température de l'eau circulant dans la conduite n'excède pas la température maximale ϑ ₘₐₓ fixée. Une seconde vanne trois voies 39 permet le remplissage initial de la conduite tubulaire flexible à traiter en connectant le réservoir 20 à une des pompes 27. Une fois le remplissage effectué, la seconde vanne trois voies 39 permet de former un circuit fermé excluant le réservoir 20.

Avantageusement, les circuits de refroidissement 36 comportent un aero-réfrigérant comportant une hélice 37 entraînée par un moteur électrique 28 soufflant sur un radiateur 38. Pour un débit d'air de 50 tonnes à l'heure, avec une température externe de 20°C, on arrive à ramener la température d'une conduite tubulaire flexible de 98°C à 35°C au bout de 24 heures.

Dans une variante intéressante, non illustrée, le dispositif d'alimentation en fluide, par exemple semblable à celui illustré par la figure 7, peut être complété par un poste d'alimentation en catalyseur qui peut être disposé, par exemple, de façon analogue au poste d'injection 41 des agents inhibiteurs de corrosion.

On a ainsi par exemple obtenu les valeurs suivantes :

### EXEMPLE 1:

essais sur une conduite flexible type "Rough-Bore"
- diamètre interne : 101,6 mm
- épaisseur de la gaine 19 en polyéthylène : 6 mm
- température minimale maintenue à la sortie ϑ ₘᵢₙ : 90°C
- taux de réticulation obtenu égal à :
   . au bout de 60 heures : 65%
   . au bout de 90 heures : 70%
   . et pratiquement égal au taux de réticulation potentiel de 72% en moins de 120 heures.

### EXEMPLES 2, 3, 4 et 5

concernant des conduites lisses (Smooth Bore) avec une gaine interne 12 en polyéthylène :

### EXEMPLE 2

- gaine interne 12 de diamètre 63 mm, épaisseur 5 mm
- température minimale assurée : 95°C
- durée de l'opération de réticulation : 48 heures
- taux de réticulation obtenu : 71%
   pour un taux de réticulation potention de 74%

### EXEMPLE 3

gaine interne 12 de diamètre 304,8 mm, épaisseur 10 mm
- longueur de conduite flexible : 950 mètres
- température minimale : 92°C
- durée : 96 heures
- taux de réticulation obtenu : 69%
   avec un débit d'eau chaude : 50 tonnes/heure, assurant une réduction de température (ϑ entrée - ϑ sortie) = 6°C et déterminant une perte de charge dans la conduite flexible 11 égale à 0,025 bars.

### EXEMPLE 4

gaine interne 12 de diamètre 50,8 mm, épaisseur 10 mm
- longueur de conduite : 7000 m
- température minimale : 92°C
- durée : 96 heures
- taux de réticulation obtenu : 69%
   avec un débit d'eau chaude : 9 tonnes/heure, assurant une réduction de température = 6°C en association avec une isolation thermique importante et déterminant une perte de charge de 34 bars.

### EXEMPLE 5

gaine interne de diamètre 101,6 mm
- épaisseur : 6 mm
- conduite de longueur : 6000 m
- température minimale : 94°C
- durée : 72 heures
- taux de réticulation obtenu : 68%
   pour un taux de réticulation potentiel de 70% avec un débit de 25 tonnes d'eau par heure, assurant une différence de température de 4°C et déterminant une perte de charge 9,5 bars.

### EXEMPLES 6 et 7 concernant des fabrications de conduites prototypes du type "Rough Bore" avec carcasse interne en feuillard agrafé.

### EXEMPLE 6

- Conduite flexible comprenant, de l'intérieur vers l'extérieur :
   . Carcasse interne 18. Feuillard agrafé.
      diamètre intérieur : 152,4 mm
   . Gaine étanche 19 en polyéthylène réticulé :
      - diamètre intérieur : 165 mm
      - diamètre extérieur : 177 mm
      - épaisseur : 6 mm
   . Armure 16 composée de 2 nappes de fils en acier enroulés hélicoïdalement
   . Gaine extérieure 17 en polyéthylène non réticulé.
- Longueur de la conduite flexible raccordée au dispositif d'alimentation en fluide : 3.600 mètres.
- Paramètres principaux de l'opération de réticulation :
   . Débit : 60 M³/heure
   . Pression en aval de la conduite flexible : 25 bars
   . Pression en amont de la condutie flexible : 33 bars
   . Perte de charge dans la conduite flexible : 8 bars
   . Température à l'entrée de la conduite flexible : 105°C
   . Température à la sortie de la conduite flexible : 100°C
   . Durée de la phase initiale de montée en température : 16 heures
   . Durée de l'opération à température constante : 120 heures.
   . Durée de la phase terminale de refroidissement : 20 heures.
   . Taux de gel mesuré à l'extrémité aval de la conduite, dans la zone de la gaine de polyéthylène où le taux de réticulation est le plus faible : 74 %.
      Le dispositif ne comportait pas de moyen d'isolation thermique à l'extérieur de la conduite flexible enroulée sur une bobine.

### EXEMPLE 7

- Conduite flexible comprenant, de l'intérieur vers l'extérieur :
   . Carcasse interne 18 de diamètre intérieur : 152,4mm
   . Gaine étanche 19 en polyéthylène réticulé
      - diamètre intérieur : 165 mm
      - diamètre extérieur : 177 mm
      - épaisseur : 6 mm
   . armure 16 composée de 2 nappes de fils acier enroulés hélicoïdalement
   . gaine en polyéthylène
   . couche d'isolation thermique épaisseur 16,5 mm en PVC expensé
   . gaine extérieure en polyéthylène non réticulé.
- Longueur totale de la conduite flexible enroulée sur une bobine, raccordée au dispositif d'alimentation :
   4.262 mètres
- Paramètres principaux de l'opération de réticulation
   . Débit 50 à 55 m³/h
   . Pression en aval de la conduite flexible : 25 bars
   . Pression en amont de la conduite flexible : 32 à 33 bars
   . Température à l'entré de la conduite flexible : 100°C
   . Température à la sortie de la conduite flexible : 95°C
   . Montée en température initiale : 14 heures
   . Maintien à température constante : 240 heures
   . Refroidissement : 18 heures
- Taux de gel mesuré à l'endroit de sa valeur la plus faible : 74 %.

Il est à noter que, dans le cas de cet exemple 7, l'isolation thermique intégrée dans la paroi de la conduite flexible joue un rôle favorable, analogue au rôle que joueraient les moyens d'isolation thermique qui peuvent être disposés, ainsi qu'illustré en 22 des figures 6 et 7, autour du volume occupé par la conduite flexible. Il est clair, par contre, que, par rapport à une conduite flexible non isolée, il serait encore plus difficile, en fait pratiquement impossible, de réaliser la réticulation de la gaine interne étanche 19 d'une telle conduite flexible avec isolation thermique en utilisant une méthode connue de réticulation avec apport de chaleur par l'extérieur de la conduite.

Des échantillons de tube d'épaisseur 6 mm réalisés en polyéthylène présentant des taux de réticulation variant entre 70 et 74% et une densité de 0, 945 ont été placés dans une enceinte autoclave chauffée à 100°C, et alternativement remplis de pétrole brut et de méthane. Les échantillons sont ainsi soumis à une succession de cycles de pressurisation et dépressurisation, la pression variant très rapidement entre 100 bars et la pression atmosphérique. La procédure d'essai consiste à répéter des séries de cycles élémentaires pressurisation/dépressurisation, chaque série durant 200 heures et comportant 10 cycles en présence de pétrole brut et 10 cycles en présence de méthane.

Un premier lot d'échantillons (échantillons A) a été réalisé par un procédé de type SIOPLAS avec les caractéristiques suivantes :
- 95 % de mélange greffé constitué par un polyéthylène greffé de densité 0,943, la silane utilisée étant la VTMOS
- 5 % de mélange maître à base de polyéthylène de densité 0,943 et comportant le DBTDL utilisé comme catalyseur.

On a réalisé ainsi des échantillons de polyéthylène réticulé par silane présentant un taux de réticulation mesuré de 72 %, très voisin du taux de réticulation potentiel.

Ces échantillons A ont subi 50 séries de 20 cycles, la durée totale atteignant 10.000 heures. On n'a observé aucune trace de cloquage ni de fissuration dans les échantillons.

Sur la base de l'expérience acquise relative au comportement des polymères et/ou copolymères en service dans les conditions réelles d'utilisation, en comparaison avec les résultats obtenus par les mêmes matériaux soumis à la procédure d'essai décrite ci-dessus, il a été établi que les gaines d'étanchéité interne de conduites tubulaires flexibles réalisés avec de tels matériaux plastiques présentent une bonne résistance aux hydrocarbures dans les conditions réelles d'exploitation et pendant des durées d'utilisation importantes lorsque les échantillons du matériau constituant la gaine ont subi avec succès les essais décrits ci-dessus pendant une durée de 10.000 heures. Les résultats ainsi obtenus montrent que, contrairement à ce qui était admis jusqu'alors, des gaines en polyoléfine, et particulièrement en polyéthylène, réticulé par silane présentent une compatibilité tout à fait satisfaisante avec les hydrocarbures bruts.

Les essais (sur échantillons) décrits ci-dessus sont réalisés en appliquant une méthode dont le principe a été exposé lors de la conférence "Improved Thermoplastic Materials Thermoplastic Materials for Offshore Flexible Pipes" donnée par F.A. DAWANS, J. JARRIN, to LEFEVRE et M. PELISSON lors de la 18ème session de l'OTC à HOUSTON (OTC 5231) citée ci-dessus et qui a été mise au point de façon à pouvoir évaluer la compatibilité des matériaux plastiques ou élastomériques avec les hydrocarbures, en éprouvant leur résistance au cloquage (blistering) , au gonflement et à la détérioration en présence d'hydrocarbures gazeux et liquide, et qui permet, en particulier, de comparer les divers matériaux envisageables pour de telles applications.

En outre, des essais complémentaires ont été réalisés sur divers échantillons en utilisant une procédure, mise au point par la Société déposante, qui consiste à exercer des cycles successifs de pressurisation-dépressurisation sur des échantillons placés dans une cellule remplie d'un hydrocarbure spécifique. Cette méthode permet d'obtenir des résultats plus rapidement, et il a été trouvé que les résultats ainsi obtenus sont équivalents à ceux obtenus par la première méthode qui alterne les cycles avec pétrole brut avec les cycles avec méthane.

Un deuxième lot - échantillons B - a été préparé par procéde du type SIOPLAS à partir de 95 % de polyéthylène greffé de densité 0,945 et 5% d'un mélange maître à base de polyéthylène de densité 0,945 avec du catalyseur DBTDL, le taux de réticulation obtenu étant de 75 % et présentant ainsi une différence ne dépassant pas 5 % par rapport au taux de réticulation potentiel qui était estimé à environ 78 à 80 %. Ces échantillons ont subi sans dommages les essais selon la méthode accelerée décrite ci-dessus.

Un troisième lot - échantillons C - a, par ailleurs, été réalisé, toujours par procédé SIOPLAS, également avec 5 % du même mélange maître que les échantillons B, mais avec un polyéthylène greffé de densité 0,963. Le taux de réticulation obtenu était de 72 %, le taux de réticulation potentiel étant d'environ 72 à 75 %. Malgré une valeur du taux de réticulation inférieure à celle des échantillons B, les essais par la méthode accelérée ont donné d'excellents résultats, jugés qualitativement encore meilleurs que ceux des échantillons B. Ceci tend à montrer l'effet très favorable d'une densité élevée des polyéthylènes utilisés.

Divers essais comparatifs ont, par ailleurs montré la nécessité, pour obtenir un bon résultat, de respecter les valeurs minimales définies concernant la densité des polyéthylènes mis en oeuvre et le taux de réticulation atteint, en particulier la différence entre le taux atteint et le taux potentiel.

Un premier lot comparatif - échantillons D - a été réalisé par le procédé SIOPLAS à partir de 95 % de polyéthylène greffé de densité 0,928 donc inférieure à la valeur fixée de 0,930 et d'un mélange maître à base de polyéthylène de même densité 0,928. Malgré un taux de réticulation relativement élevé de 80 %, pratiquement égal au taux potentiel, les échantillons, soumis aux essais selon la procédure avec alternance de pétrôle brut et de méthane, ont été complètement détruits en moins de 200 heures.

Un deuxième lot comparatif - échantillons E - a été réalisé par le procédé SIOPLAS à partir de 95 % d'un polyéthylène greffé de densité 0,943 et de 5 % d'un mélange maître à base de polyéthylène de densité 0,930. Malgré les densités plus importantes que celles des échantillons D et un taux de réticulation de 75 %, pratiquement égal au taux potentiel, des traces de cloquage sont apparues en moins de 1.000 heures, ce qui n'est pas acceptable dans l'industrie pétrolière, lors des essais selon la méthode alternant pétrole brut et méthane. Il a ainsi été confirmé que le seul fait d'utiliser un polyéthylène d'une densité 0,930 juste inférieure à la limite fixée suffit pour déterminer un résultat inacceptable, et ceci bien que le composé présentant ainsi une densité insuffisante n'intervienne que pour 5 % dans le poids total de polyéthylène réticulé.

Un troisième lot comparatif - échantillons F - a été réalisé par le procédé SIOPLAS à partir de 95 % d'un polyéthylène greffé (la silane utilisée étant une VTMOS) de densité 0,951 et de 5 % d'un mélange maître à base de polyéthylène de densité 0,928, le taux de réticulation étant de 72 %, pratiquement égal au taux potentiel. Ces échantillons F ayant été soumis aux essais selon la seconde procédure, accélérée, il a été constaté du cloquage en moins de 1000 heures d'essais, ce qui prouve la non compatibilité de ces échantillons avec le pétrole brut. Outre qu'il confirme l'inaptitude à supporter le pétrole brut des polyéthylènes présentant une densité inférieure à la limite fixée, cet essai montre aussi qu'il y a un recoupement satisfaisant entre les résultats obtenus par les deux méthodes d'essais utilisées.

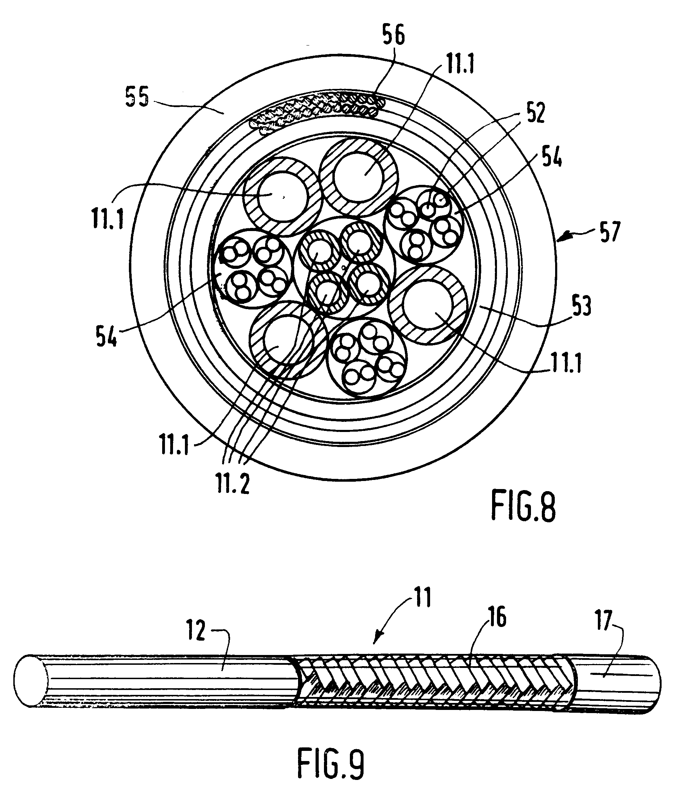

La présente invention concerne également les conduites flexibles incorporées à un faisceau flexible du type ombilical dont un exemple de réalisation est illustré sur la figure 8. Les flexibles ombilicaux peuvent être utilisés dans les installations de télécommande hydraulique ou électro-hydraulique d'équipements sous-marins, en particulier pour la production de gisements pétroliers, ainsi que pour assurer le contrôle des puits, l'injection de fluides ou autres fonctions associées à l'exploitation du gisement, y compris, le cas échéant, le transport d'huile ou de pétrole brut. Il est important que la conduite d'injection d'un fluide soit, d'une part, étanche aux divers fluides à transporter et, d'autre part, soit compatible avec ces divers fluides. L'utilisation du polyéthylène réticulé par silane comme tube d'étanchéité interne permet de diviser par environ 50 la perméabilité au méthanol, par exemple, par rapport au polyamide 11.

L'exemple de flexible ombilical 57 illustré sur la figure 8 comporte en son centre un assemblage comprenant quatre conduites tubulaires flexibles hydrauliques 11.2 de faible diamètre interne, par exemple sensiblement égal à 6 mm ainsi que quatre conduites tubulaires flexibles hydrauliques 11.1 d'un diamètre interne égal à 12 mm disposées autour de l'assemblé central constitué par les quatre flexibles hydrauliques 11.2. Le flexible ombilical de la figure 8 comporte en outre 3 faisceaux 54 de conducteurs électriques. Chaque faisceau 54 comporte quatre paires de conducteurs électriques 52 isolés. Les conducteurs électriques 52 sont par exemple destinés à véhiculer des signaux de télécommande.

Les conduites tubulaires flexibles 11.1 et les faisceaux 54 ainsi que les conduites tubulaires flexibles 11.2 sont disposés en hélices continues, ou en tronçons d'hélices alternées, avec inversion périodique de l'angle de l'hélice (arrangement SZ).

Avantageusement, la conduite tubulaire flexible ombilicale comporte une gaine externe 55 avantageusement réalisée par extrusion par exemple en polyéthylène basse densité (LDPE) ainsi que des armures 56 qui sont par exemple réalisées en fil d'acier rond. Le flexible ombilical peut, en outre, comporter une gaine intermédiaire 53 servant d'assise aux armures 56, par exemple en polyéthylène extrudé faible densité.

Dans l'état actuel de la technique, le tube interne étanche des flexibles hydrauliques tels que 11.1 et 11.2 est couramment réalisé, par exemple en polyamide 11, ou encore en polyether élastomérique tel que vendu sous la marque HYTREL par la Société Dupont de Nemours, ces matériaux étant en général considérés comme étant d'une compatibilité à peu près satisfaisante par rapport aux fluides variés à transporter, c'est-à-dire comme n'étant pas sujet à se dégrader d'une façon inacceptable en présence de l'un ou l'autre de ces divers fluides. Par contre, il a récemment été trouvé que leur perméabilité excessive au méthanol et aux alcools en général, est extrêmement nuisible dans certains cas d'application.

Le flexible ombilical selon l'invention, tel que décrit en figure 8, est caractérisé par le fait qu'au moins l'une des conduites tubulaires flexibles hydrauliques qu'il comporte, telles que 11.1 et 11.2, est une conduite flexible 11 selon l'invention, c'est-à-dire qu'elle comporte une gaine interne étanche 12 en polyoléfine, notamment en polyéthylène, réticulée par hydrolyse.

Sur la figure 9, on peut voir un exemple de réalisation d'une conduite tubulaire flexible hydraulique 11. Selon l'application, elle doit pouvoir supporter une pression comprise entre 100 et 500 bars, typiquement 350 bars. La conduite tubulaire flexible 11 a, par exemple, un diamètre interne pouvant varier de 3 mm à 30 mm. La conduite 11 comporte une armure 16 et une gaine externe 17. La gaine interne 12 est realisée en polyoléfine, notamment en polyéthylène réticulé par silane. L'armure 16 comporte par exemple des fibres, avantageusement en polyamide aromatique, par exemple aramide telles que les fibres vendues sous la marque Kevlar par la Société Dupont de Nemours ou sous la marque Twaron vendues par la Société Akzo. Les fibres sont par exemple posées en hélices (nappées), tissées ou guipées. Dans une variante de réalisation on utilise des armures 16 comportant des fils métalliques, par exemple en acier. La gaine externe 17 est avantageusement extrudée. Elle est réalisée par exemple en polyamide ou en polyuréthane.

La réticulation de la gaine 12 des conduites tubulaires flexibles hydrauliques 11 (telles que 11.1 et 11.2 de la figure 8) est réalisée soit par l'extérieur, avant la pose de l'armure 16 et de la gaine externe 17, soit en faisant circuler, par exemple, de l'eau chaude à l'intérieur de la gaine 12. Cette dernière méthode peut être appliquée aussi bien à la gaine 12 seule, qu'à la conduite tubulaire flexible hydraulique 11 (telles que 11.1 et 11.2) ou même à la conduite tubulaire flexible ombilicale de la figure 8 terminée.

En outre, on peut également réaliser les gaines extérieure 55 ou intermédiaire 53 du flexible ombilical de la figure 8, ou la gaine extérieure 17 du flexible 11 (tel que 11.1 et 11.2) en polyéthylène réticulé par silane, l'apport d'eau et/ou de chaleur nécessaire à la réticulation se faisant par l'extérieur.

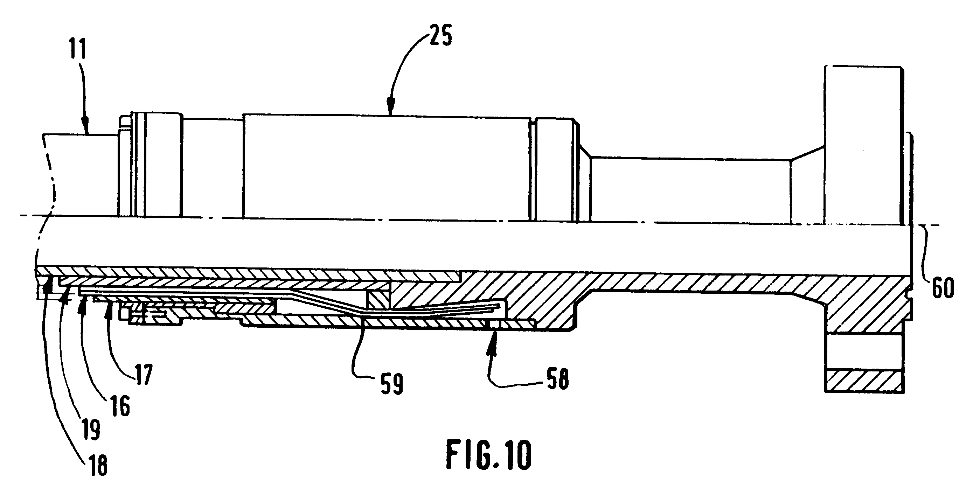

Sur la figure 10, on peut voir un exemple d'embout 25 comportant une ouverture 58 pour l'extraction du fluide dégagé dans l'espace annulaire de la conduite tubulaire flexible 11 lors de la réticulation. Dans l'exemple illustré, l'ouverture 10 est circulaire d'axe perpendiculaire à l'axe 60 de la conduite 11. Dans l'exemple illustré, l'embout 25 est équipé d'une soupape 59. Il est bien entendu possible de reboucher l'ouverture 58 par exemple par soudure. Toutefois, il peut s'avérer intéressant de permettre d'évacuer par l'ouverture 58 et par l'intermédiaire de la soupape 59, les fluides, principalement les gaz diffusés à travers la gaine d'étanchéité 19. Par exemple, une gaine selon la présente invention ne sera pas parfaitement étanche au gaz naturel présent dans le pétrole brut. L'ouverture 58 et la soupape 59 permettent d'évacuer en toute sécurité ces gaz à l'extérieur de l'espace annulaire de la conduite.

## Revendications

1. Conduite tubulaire flexible comportant une gaine d'étanchéité interne (12,19) réalisée par extrusion d'un ou plusieurs composés à base de polyéthylène, au moins une couche d'armure (13,14,16,18) autour de ladite gaine interne et une gaine externe (17), caractérisée par le fait que ladite gaine interne (12,19) comporte un polyéthylène greffé au silane et est réticulée par hydrolyse à un taux de réticulation d'au moins 70% en tout endroit du matériau constitutif de ladite gaine, et que la densité de chacun des polyéthylènes du ou desdits composés est supérieure ou égale à 0,931 g/cm³, de préférence supérieure ou égale à 0,940 g/cm³.

2. Conduite tubulaire flexible selon l'une quelconque la revendication 1, caractérisée par le fait que le taux de réticulation de ladite gaine interne (12,19) en fin d'opération de réticulation est inférieur au taux de réticulation potentiel d'une valeur inférieure ou égale à 10%.

3. Procédé de fabrication d'une conduite tubulaire flexible comportant une gaine tubulaire d'étanchéité interne (9,12) en polyoléfine, notamment en polyéthylène, au moins une couche d'armure (13,14,16,18) et une gaine externe (17), caractérisé par le fait que l'on remplit la conduite tubulaire flexible (11), maintenue à l'air libre, avec un fluide contenant de l'eau, l'on met en circulation ledit fluide à travers ladite conduite d'une extrémité à l'autre de celle-ci, et l'on chauffe la gaine interne (9,12) de façon à réaliser la réticulation par hydrolyse de ladite gaine interne.

4. Procédé selon la revendication 3, caractérisé par le fait que ladite gaine interne est réalisée par extrusion d'un ou plusieurs composés à base de polyéthylène, la densité de chacun des polyéthylènes du ou des composés étant supérieure ou égale à 0,931 g/cm³, de préférence supérieure ou égale à 0,940 g/cm³.

5. Procédé selon la revendication 4, caractérisé par le fait que l'on effectue la réticulation de ladite gaine interne de manière que le taux de réticulation de ladite gaine interne en fin d'opération de réticulation soit inférieur au taux de réticulation potentiel d'une valeur inférieure ou égale à 10%.

6. Procédé selon l'une quelconque des revendications 4 et 5, caractérisé par le fait que l'on effectue la réticulation de ladite gaine interne de manière que le taux de réticulation de ladite gaine interne en fin d'opération de réticulation soit au moins de 70% en tout endroit du matériau constitutif de ladite gaine.

7. Procédé selon l'une quelconque des revendications 3 à 6, caractérisé par le fait que l'on chauffe ladite gaine interne en chauffant ledit fluide contenant de l'eau mis en circulation à travers ladite conduite tubulaire.

8. Procédé selon l'une quelconque des revendications 3 à 7, caractérisé par le fait que ledit fluide contient de l'eau, au moins en partie, en phase liquide.

9. Procédé selon l'une quelconque des revendications 3 à 7, caractérisé par le fait que l'on effectue la réticulation par hydrolyse de la gaine interne postérieurement à l'assemblage définitif de ladite conduite tubulaire flexible.

10. Procédé selon l'une quelconque des revendications 3 à 9, pour réaliser une conduite tubulaire flexible comportant une carcasse interne (18), caractérisé par le fait que pendant l'étape de réticulation par hydrolyse on maintient, dans la conduite tubulaire flexible, une pression suffisante pour permettre au fluide de traverser ladite carcasse.

11. Procédé selon l'une quelconque des revendications 3 à 10, caractérisé par le fait que l'on procède à l'extraction des produits formés lors de la réticulation dans l'espace annulaire de la conduite tubulaire flexible.

12. Procédé selon l'une quelconque des revendications 3 à 11, caractérisé par le fait que ledit fluide remplissant la conduite tubulaire flexible contient au moins une partie du catalyseur de la réaction de réticulation.

13. Procédé selon l'une quelconque des revendications 3 à 12, caractérisé par le fait que l'on isole thermiquement la conduite tubulaire flexible pendant l'étape de réticulation par hydrolyse.

## Patentansprüche

1. Flexible Rohrleitung mit einem durch Extrudieren einer oder mehrerer Verbindungen auf Polyethylenbasis hergestellten Dichtungs-Innenmantel (12, 19), mindestens einer Bewehrungsschicht (13, 14, 16, 18) um den Innenmantel herum, und einem Außenmantel (17), **dadurch gekennzeichnet**, daß der Innenmantel (12, 19) aus einem Polyethylen-Silan-Pfropfcopolymer besteht und durch Hydrolyse mit einem Vernetzungsgrad von mindestens 70% an jeder Stelle des den Mantel bildenden Materials vernetzt ist, und daß die Dichte jedes der Polyethylene oder der Verbindungen 0,931 g/cm³ oder mehr, bevorzugt 0,940 g/cm³ oder mehr, beträgt.

2. Flexible Rohrleitung nach Anspruch 1, dadurch gekennzeichnet, daß der Vernetzungsgrad des Innenmantels (12, 19) am Ende des Vernetzungsvorgangs unter dem möglichen Vernetzungsgrad mit einem Wert von 10% oder darunter liegt.

3. Verfahren zum Herstellen einer flexiblen Rohrleitung mit einem rohrförmigen Dichtungs-Innenmantel (9, 12) aus Polyolefin, insbesondere Polyethylen, mindestens einer Bewehrungsschicht (13, 14, 16, 18) und einem Außenmantel (17), dadurch gekennzeichnet, daß die an der freien Luft gehaltene flexible Rohrleitung (11) mit einem Wasser enthaltenden Fluid gefüllt, das Fluid durch die Leitung hindurch von einem Ende zum anderen umgewälzt und der Innenmantel (9, 12) beheizt wird, um eine bedingte Vernetzung des Innenmantels durch Hydrolyse zu erzielen.

4. Verfahren nach Anspruch 3, dadurch gekennzeichnet, daß der Innenmantel durch Extrudieren einer oder mehrerer Verbindungen auf Polyethylenbasis hergestellt wird, wobei die Dichte jedes der Polyethylene oder der Verbindungen 0,931 g/cm³ oder mehr, vorzugsweise 0,940 g/cm³ oder mehr, beträgt.

5. Verfahren nach Anspruch 4, dadurch gekennzeichnet, daß die Vernetzung des Innenmantels so ausgeführt wird, daß sein Vernetzungsgrad am Ende des Vernetzungsvorgangs unter dem möglichen Vernetzungsgrad mit einem Wert von 10% oder darunter liegt.

6. Verfahren nach einem der Ansprüche 4 oder 5, dadurch gekennzeichnet, daß die Vernetzung des Innenmantels so ausgeführt wird, daß sein Vernetzungsgrad am Ende des Vernetzungsvorgangs an jeder Stelle des den Mantel bildenden Materials mindestens 70% beträgt.

7. Verfahren nach einem der Ansprüche 3 bis 6, dadurch gekennzeichnet, daß der Innenmantel dadurch erwärmt wird, daß das durch die Rohrleitung umgewälzte Wasser enthaltende Fluid erwärmt wird.

8. Verfahren nach einem der Ansprüche 3 bis 7, dadurch gekennzeichnet, daß das Fluid zumindest teilweise Wasser als flüssige Phase enthält.

9. Verfahren nach einem der Ansprüche 3 bis 7, dadurch gekennzeichnet, daß die hydrolysebedingte Vernetzung des Innenmantels nach dem Endzusammenbau der flexiblen Rohrleitung ausgeführt wird.

10. Verfahren nach einem der Ansprüche 3 bis 9 zum Herstellen einer flexiblen Rohrleitung mit einer Innenkarkasse (18), dadurch gekennzeichnet, daß während der hydrolysebedingten Vernetzung in der flexiblen Rohrleitung ein Druck aufrechterhalten wird, der dazu ausreicht, daß das Fluid die Karkasse durchdringen kann.

11. Verfahren nach einem der Ansprüche 3 bis 10, dadurch gekennzeichnet, daß die bei der Vernetzung im ringförmigen Raum der flexiblen Rohrleitung gebildeten Produkte entfernt werden.

12. Verfahren nach einem der Ansprüche 3 bis 11, dadurch gekennzeichnet, daß das die flexible Rohrleitung füllende Fluid mindestens einen Teil eines Katalysators für die Vernetzungsreaktion enthält.

13. Verfahren nach einem der Ansprüche 3 bis 12, dadurch gekennzeichnet, daß die flexible Rohrleitung während der hydrolysebedingten Vernetzung thermisch isoliert wird.

## Claims

1. A flexible tubular conduit comprising an inner sealing sleeve (12, 19) obtained by the extrusion of one or more polyethylene-based compounds, at least one reinforcement layer (13, 14, 16, 18) round the said inner sleeve, and an outer sleeve (17), characterized in that the said inner sleeve (12, 19) includes a silane-grafted polyethylene and is cross-linked by hydrolysis at a cross-linking rate of at least 70% at all points of the material constituting the said sleeve, and that the density of each of the polyethylenes of the said compound or compounds is greater than or equal to 0.931 g/cm³, preferably greater than or equal to 0.940 g/cm³.

2. A flexible tubular conduit according to claim 1, characterized in that the cross-linking rate of the said inner sleeve (12, 19) at the end of the cross-linking operation is less than the potential cross-linking rate by a value of less than, or equal to 10%.

3. A method for manufacturing a flexible tubular conduit comprising an inner sealing sleeve (9, 12) made of polyolefin, in particular of polyethylene, at least one reinforcement layer (13, 14, 16, 18), and an outer sleeve (17); characterized in that the flexible tubular conduit (11), kept in the free air, is filled with a fluid containing water; that the said fluid is caused to circulate through the said conduit from one end to the other of the latter, and that the inner sleeve (9, 12) is heated so as to obtain the cross-linking by hydrolysis of the said inner sleeve.

4. A method according to claim 3, characterized in that the said inner sleeve is obtained by the extrusion of one or more polyethylene-based compounds, the density of each of the polyethylenes of the compound or compounds being greater than or equal to 0.931 g/cm³, preferably greater or equal to 0.940 g/cm³.

5. A method according to claim 4, characterized in that the cross-linking of the said inner sleeve is effected in such a way that the cross-linking rate of the said inner sleeve at the end of the cross-linking operation is less than the potential cross-linking rate by a value of less than or equal to 10%.

6. A method according to either of claims 4 and 5, characterized in that at the end of the cross-linking operation the cross-linking of the said inner sleeve is effected in such a way that the cross-linking rate of the said inner sleeve is at least 70% at any point of the material constituting the said sleeve.

7. A method according to any one of claims 3 to 6, characterized in that the said inner sleeve is heated by heating the said fluid containing water which is caused to circulate through the said flexible conduit.

8. A method according to any one of claims 3 to 7, characterized in that the said fluid contains water at least partly in its liquid phase.

9. A method according to any one of claims 3 to 7, characterized in that the cross-linking by hydrolysis of the inner sleeve is effected subsequently to the final assembly of the said flexible tubular conduit.

10. A method according to any one of claims 3 to 9 for making a flexible tubular conduit comprising an inner shell (18), characterized in that, during the stage of cross-linking by hydrolysis, a pressure is maintained in the flexible tubular conduit which is sufficient to allow the fluid to pass through the said shell.

11. A method according to any one of claims 3 to 10, characterized in that one proceeds with the extraction of the products formed during the cross-linking in the annular space of the flexible tubular conduit.

12. A method according to any one of claims 3 to 11, characterized in that the said fluid filling the flexible tubular conduit contains at least a proportion of the catalyst for the cross-linking reaction.

13. A method according to any one of claims 3 to 12, characterized in that the flexible tubular conduit is thermally insulated during the stage of cross-linking by hydrolysis.
